# EUROPEAN PATENT SPECIFICATION

(11) **EP 3 748 530 B1**
(45) Date of publication and mention of the grant of the patent: **29.11.2023**
(21) Application number: 18899033.7
(22) Date of filing: 22.10.2018
(51) Int. Cl.: G06V 40/13, G06V 40/12, G06F 3/041, G06F 21/32

(54) **FINGERPRINT IDENTIFICATION METHOD AND DEVICE, DISPLAY PANEL AND READABLE STORAGE MEDIUM**
FINGERABDRUCKIDENTIFIKATIONSVERFAHREN UND -VORRICHTUNG, ANZEIGETAFEL UND LESBARES SPEICHERMEDIUM
PROCÉDÉ ET DISPOSITIF D'IDENTIFICATION D'EMPREINTE DIGITALE, PANNEAU D'AFFICHAGE ET SUPPORT DE STOCKAGE LISIBLE

(30) Priority: 31.01.2018 CN 201810098372
(43) Date of publication of application: 09.12.2020
(73) Proprietor: BOE Technology Group Co., Ltd., Beijing 100015 (CN)
(72) Inventor: LI, Changfeng, Beijing 100176 (CN); WANG, Haisheng, Beijing 100176 (CN); LIU, Yingming, Beijing 100176 (CN); DING, Xiaoliang, Beijing 100176 (CN); XU, Rui, Beijing 100176 (CN); QIN, Yunke, Beijing 100176 (CN); GUO, Yuzhen, Beijing 100176 (CN); LU, Pengcheng, Beijing 100176 (CN)
(74) Representative: Brötz, Helmut
(86) International application number: PCT/CN2018/111146
(87) International publication number: WO 2019/148896

(56) References cited:
- CN-U- 206 401 320
- CN-U- 206 515 839
- CN-U- 206 515 839
- CN-U- 206 946 506
- CN-U- 206 946 506
- KR-A- 20150 131 944

## Description

The present application claims priority to Chinese patent application No. 201810098372.0, filed on January 31, 2018.

### TECHNICAL FIELD

Embodiments of the present disclosure relate to a fingerprint identification method, a fingerprint identification device, a display panel and a readable storage medium.

### BACKGROUND

A fingerprint is an invariant features which is inherent and unique for a human being and distinguishable from others. The fingerprint consists of a series of ridges and valleys on the surface of a fingertip, and the compositional details of these ridges and valleys determine the uniqueness of the fingerprint pattern. Therefore, fingerprint identification technology has been used for personal identification from earlier.
CN206946506U discloses a photoelectric sensor module and an electron device. The photoelectric sensor module includes: a first base substrate and a second base substrate which are disposed oppositely to each other, the first base substrate including a first surface facing the second base substrate and the second base substrate including a second surface facing the first base substrate; a light emitting unit, disposed between the first base substrate and the second base substrate, the light emitting unit being a passive matrix organic electroluminescence emitting diode and configured to emit light to arrive at a target object when the target object is located on the photoelectric sensor module; and a photo sensing unit, disposed on the first surface or the second surface and configured to receive a light signal reflected by the target objection, and convert the light signal to a corresponding electric signal. The electron device includes the photoelectric sensor module.
CN206515839U discloses an organic light-emitting diode display screen fingerprint identification device. The organic light-emitting diode display screen fingerprint identification device includes a plurality of sub-pixel units with same size and arranged in matrix. The plurality of sub-pixel units are configured to emit monochromatic light, blue, green, and red, respectively, to combine with each other, in order to form a color image. Three adjacent sub-pixel units are arranged in sequence, to form a pixel region. In each pixel region, the respective sub-pixel units emit the monochromatic light with different colors, and at least one of the sub-pixel units includes a displaying module and a light receiving module. The displaying module is configured to emit the monochromatic light, and the light receiving module is configured to receive the respective monochromatic light reflected by a finger and convert a light signal into an electric signal. CN206515839U further discloses an electronic device. On the one hand, the pixel region emits light to display an image, and on the other hand, the light is received by light receiving module, so that the organic light-emitting diode display panel has a full-screen fingerprint identification function.

### SUMMARY

The present invention is defined as set out in the appended claims. plurality of light emitting units during the fingerprint identification phase.

In some examples, the plurality of light emitting arrays includes a first light emitting array and a second light emitting array adjacent to each other; wherein the first light emitting array and the second light emitting array share the plurality of photosensitive elements.

At least an embodiment of the present disclosure provides a display panel, which includes the fingerprint identification device provided by any one of the embodiments of the present disclosure.

### BRIEF DESCRIPTION OF THE DRAWINGS

In order to clearly illustrate the technical solutions of the embodiments of the disclosure, the drawings of the embodiments will be briefly described in the following; it is obvious that the described drawings are only related to some embodiments of the disclosure and thus are not limitative to the disclosure.
FIG. 1A is a block diagram of components of a fingerprint identification device provided by an embodiment of the present disclosure;
FIG. 1B is a schematic structural diagram of a light emitting array provided by an embodiment of the present disclosure;
FIG. 1C is a schematic structural diagram of a light emitting array provided by another embodiment of the present disclosure;
FIG. 1D is a schematic diagram of reflected light signals in a case where there is no touching finger provided by an embodiment of the present disclosure;
FIG. 1E is a schematic diagram of reflected light signals in a case where there is a touching finger provided by an embodiment of the present disclosure;
FIG. 2 is a block diagram of components of a fingerprint identification device provided by an embodiment of the present disclosure;
FIG. 3 is a schematic diagram of two light emitting arrays sharing photosensitive elements provided by an embodiment of the present disclosure;
FIG. 4 is a block diagram of components of a display panel provided by an embodiment of the present disclosure;
FIG. 5A is a schematic diagram of components of a display panel including a plurality of pixels provided by an embodiment of the present disclosure;
FIG. 5B is a longitudinal cross-sectional view of an OLED display panel provided by an embodiment of the present disclosure;
FIG. 6A is a flowchart of a fingerprint identification method provided by an embodiment of the present disclosure;
FIG. 6B is a schematic structural diagram provided for illustrating the method of FIG. 6A by an embodiment of the present disclosure;
FIG. 7 is a flowchart of a fingerprint identification method by driving a plurality of light emitting units to emit light provided by an embodiment of the present disclosure;
FIG. 8A is a schematic structural diagram for further illustrating the method in FIG. 7 provided by an embodiment of the present disclosure;
FIG. 8B is a schematic structural diagram for further illustrating the method in FIG. 7 provided by another embodiment of the present disclosure;
FIG. 9 is a flowchart of a fingerprint identification method by driving a plurality of light emitting units to emit light provided by another embodiment of the present disclosure;
FIG. 10 is a schematic structural diagram for further illustrating the method in FIG. 9 provided by an embodiment of the present disclosure;
FIG. 11 is a flowchart of a fingerprint identification method provided by still another embodiment of the present disclosure; and
FIG. 12 is a schematic diagram of a case where there exist shared photosensitive elements provided by another embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs.

In the following content provided by the present disclosure, for the purpose of describing sharing photosensitive element, in some embodiments, two adjacent light emitting arrays are respectively referred to as a first light emitting array and a second light emitting array, etc.. In some other embodiments, the first light emitting array and the second light emitting array, etc., refer only to two different light emitting arrays.

At least one embodiment of the present disclosure uses a light emitting unit included in a light emitting array as a light wave emitting unit to emit an light signal along a display direction of a display panel, and uses a plurality of photosensitive elements disposed within a predetermined range in the vicinity of a plurality of predetermined light emitting units as receiving units to receive a plurality of reflected light signals of the light signal, and finally, performs a fingerprint identification based on distances between positions at which the reflected light signals are received and a position of the light emitting unit and the plurality of reflected light signals (for example, by comparing the distance and the plurality of reflected light signals).

First, when a finger is pressed on the display panel, a position of a valley and a position of a ridge in the fingerprint of the finger cause different reflected light signals for a same incident light signal. Because there exists an air gap between the position of the valley in the fingerprint of the finger and the touch panel, and energy of reflected light signal by the air is small and light reflection directions are many, few incident light signals are reflected to the photosensitive elements. There is no air gap between the position of the ridge in the fingerprint of the finger and the touch panel, so most of the incident light signals can be reflected. Then, if it is not a finger but a plane that can uniformly reflect light that contacts the touch panel, a relatively regular attenuation occurs (for example, the farther away from the light-emitting unit, the smaller the received reflected light signal) after the light signal emitted from each light-emitting unit is reflected and reaches the plurality of photosensitive elements located at different positions. Therefore, according to the fact that the attenuation regularity is destroyed by the valley and the ridge of the fingerprint, whether a corresponding photosensitive position belongs to a ridge or a valley can be determined. For example, the embodiment of the present disclosure can perform a fingerprint identification at least by comparing the plurality of reflected light signals to find whether there is a change in the attenuation regularity at respective positions.

The fingerprint identification device provided by the embodiments of the present disclosure has a simple structure, and can omit a physical button for fingerprint identification. The algorithm of the fingerprint identification method provided by the embodiments of the present disclosure has a small amount of computing, and can realize an under-screen fingerprint identification or even a full-screen fingerprint identification.

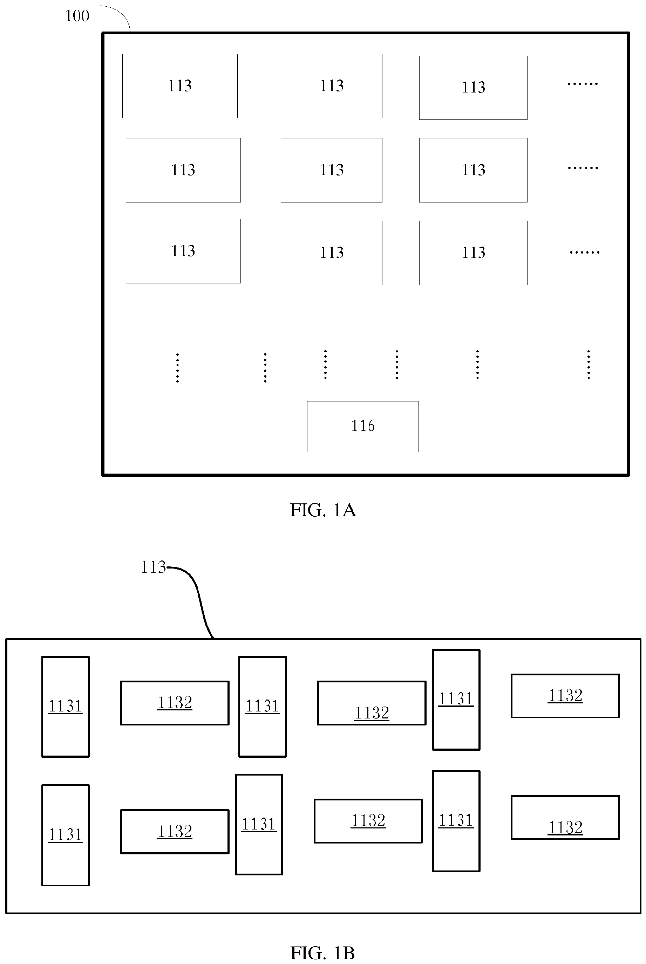

A fingerprint identification device 100 provided by the embodiment of the present disclosure is described below with reference to FIG. 1A and FIG. 1B. The fingerprint identification device is specifically implemented as, for example, a display panel and a display device having an under-screen fingerprint identification function.

The fingerprint identification device 100 of the embodiment of the present disclosure includes a plurality of light emitting arrays 113 and a processor 116 (as shown in FIG. 1A), and a plurality of photosensitive elements 1132 distributed in each light emitting array 113 (as shown in FIG. 1B).

The plurality of light emitting arrays 113 can be evenly distributed in a region (for example, a display region of the display panel), but the density of the light emitting arrays 113 can also be set according to the frequencies at which different regions on the touch panel are contacted by the finger. For example, a large density of the light emitting arrays 113 can be disposed below a region where the finger is frequently contacted and a fingerprint identification is required, and a small density of the light emitting arrays 113 can be disposed below a region where a fingerprint identification is not often required.

Each of the light emitting arrays 113 can include one or a plurality of light emitting units 1131 arranged in an array. As shown in FIG. 1B, the light emitting array 113 includes six light-emitting units 1131 arranged in two rows and three columns. FIG. 1B is for illustrative purposes only, and the embodiment of the present disclosure does not limit the number of light emitting units 1131 included in one light emitting array 113, nor the number of photosensitive elements 1132.

The light emitting unit 1131 is configured to emit a light signal in a specific direction (i.e., in a direction in which the touch panel is located) in a fingerprint identification phase. For example, the light emitting unit 1131 can be a visible light emitting device for emitting a visible light signal of a predetermined wavelength range. For example, for the display panel, the light emitting unit 1131 can be a sub-pixel unit having a self-luminous function, such as an OLED sub-pixel unit.

The plurality of photosensitive elements 1132 are configured to receive a plurality of reflected light signals caused by the light of the light emitting unit 1131. For example, the photosensitive element 1132 can be a photo sensor, which can include any device that can respond to the intensity of the reflected light signal and provide a meaningful and detectable output. For example, examples of photo sensors that can be used in the embodiments of the present disclosure include, but are not limited to, photodiodes or phototransistors, etc..

The photosensitive elements 1132 can be disposed at a plurality of first positions in the light emitting array 113. For example, as shown in FIG. 1B, the photosensitive element 1132 and the light emitting unit 1131 are disposed in one-to-one correspondence, and the photosensitive element 1132 is located at a lateral side of the corresponding light emitting unit 1131, for example, at the gap between adjacent two light emitting units 1131. The "disposed in one-to-one correspondence" herein merely exemplarily shows an arrangement relationship between the photosensitive element 1132 and the light emitting unit 1131, but the embodiments of the present disclosure is not limited thereto. According to the embodiments of the present disclosure, light emitted from the light emitting unit 1131 can be received by the photosensitive elements 1132 (including the photosensitive element corresponding to the light emitting unit) at the plurality of first positions, therefore, the fingerprint identification is performed depending on the positions of the photosensitive elements and the light signals received by the photosensitive elements.

It should be noted that, in one light emitting array 113 of the embodiments of the present disclosure, at least one light emitting unit 1131 and two photosensitive elements 1132 having different distances from the light emitting unit 1131 can be disposed. In the light emitting array 113 of the embodiments of the present disclosure, two or more light emitting units 1131 and at least two photosensitive elements 1132 having different distances from the light emitting units 1131 can also be disposed. The embodiments of the present disclosure do not limit the quantitative proportional relationship of the plurality of light emitting units 1131 and the plurality of photosensitive elements 1132 located in one light emitting array 113.

The processor 116 is configured to obtain the plurality of reflected light signals from the plurality of photosensitive elements 1132, and perform the fingerprint identification based on the distances between the plurality of positions where the photosensitive elements 1132 are located and the light emitting unit 1131 and the plurality of reflected light signals. For example, a "distance" herein refers to a distance between a light emitting unit that is currently emitting light during detecting and a photosensitive element for detecting the light emitted from the light emitting unit. For example, as shown in FIG. 1B, at a certain time during detecting, if the second light emitting unit 1131 of the upper row is set to emit light, the "distance" herein refers to the distance between each photosensitive element 1132 in the light emitting array 113 and the light emitting unit 1131 that is emitting light. For example, at another time during detecting, another light emitting unit can be set to emit light, and the "distance" herein is the distance between each photosensitive element and the another light emitting unit that is emitting light. For example, the processor 116 can obtain the reflected light signal from the photosensitive element 1132 through a transmission line. For example, the processor 116 determines whether the touch position belongs to a valley or a ridge by comparing the reflected light signals received at different distances with a reference signal.

The processor 116 can process and compute data signals, and can be of various computing architectures, such as a complex instruction set computer (CISC) architecture, a reduced instruction set computer (RISC) architecture, or an architecture that implements a combination of multiple instruction sets. For example, the processor 116 can be a digital signal processor (DSP), a microprocessor or a central processing unit, etc.. For example, the processor 116 can be dedicated to fingerprint identification, and can also be used to process other tasks in addition to fingerprint identification.

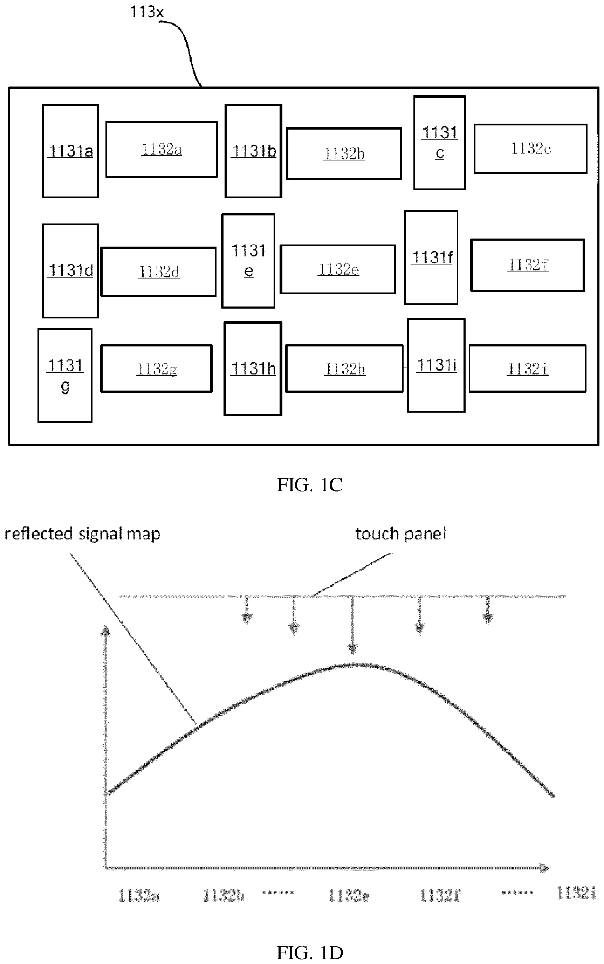

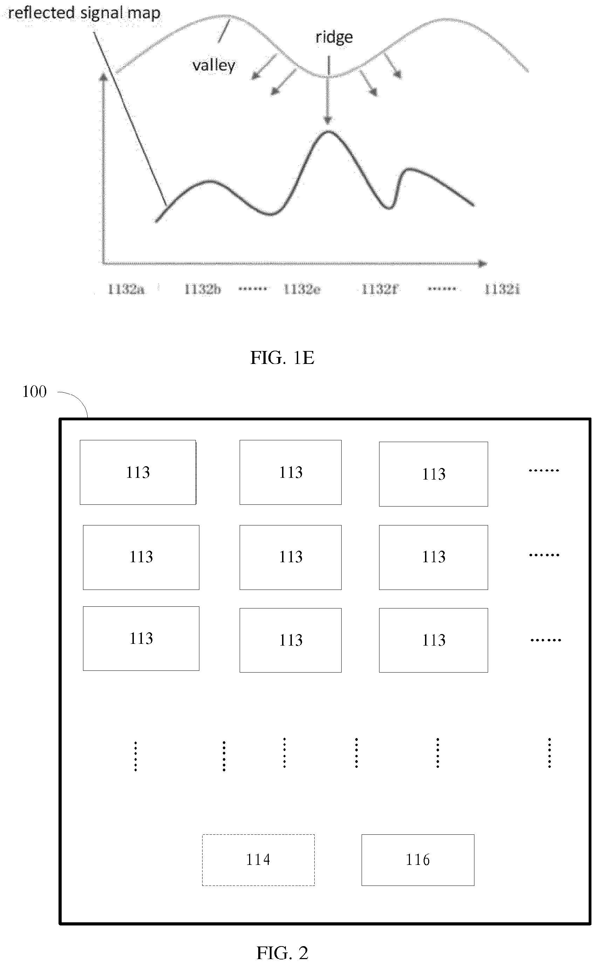

The process and related principle of the processor 116 performing fingerprint identification based on the distances and the plurality of reflected light signals are described below with reference to FIG. 1C, FIG. 1D and FIG. 1E.

The light emitting array 113x shown in FIG. 1C is a light emitting array 113 arbitrarily selected from FIG. 1A.

The light emitting array 113x shown in FIG. 1C includes nine light emitting units (i.e., light emitting units 1131a, 1131b, 1131c, 1131d, 1131e, 1131f, 1131g, 1131h and 1131i), which can emit, for example, visible light of one color. The light emitting array 113x further includes nine photosensitive elements, which are a first photosensitive element 1132a, a second photosensitive element 1132b, a third photosensitive element 1132c, a fourth photosensitive element 1132d, a fifth photosensitive element 1132e, a sixth photosensitive element 1132f, a seventh photosensitive element 1132g, an eighth photosensitive element 1132h and a ninth photosensitive element 1132i, respectively, and can detect the visible light of the above color to generate an electrical signal whose intensity corresponds to the intensity of the received reflected light thereof. The above embodiment has been described by taking visible light as an example, and the visible light can be emitted from the display element of the display device, so that it is not necessary to additionally provide the light emitting elements. However, the embodiments of the present disclosure are not limited thereto, and light emitting elements for fingerprint identification can be additionally provided. The light used for fingerprint identification according to the embodiments of the present disclosure is not limited to being visible light, and can be non-visible light such as infrared light.

For example, at a certain time t, the light emitting unit 1131e located at the center of the light emitting array 113x emits light, and the remaining light emitting units do not emit light. When the incident light emitted from the light emitting unit 1131e is irradiated to the touch panel, the touch panel or the finger on the touch panel reflects the incident light to the nine photosensitive elements (i.e., reflects the incident light to the first photosensitive element 1132a, the second photosensitive element 1132b, the third photosensitive element 1132c, the fourth photosensitive element 1132d, the fifth photosensitive element 1132e, the sixth photosensitive element 1132f, the seventh photosensitive element 1132g, the eighth photosensitive element 1132h and the ninth photosensitive element 1132i). Therefore, each of the nine photosensitive elements will receive a reflected light signal, and a total of nine reflected light signals are obtained.

The abscissa in FIG. 1D represents an arrangement order of the nine light emitting units of FIG. 1C, and the ordinate represents the light intensity value of the reflected light signals received by the nine photosensitive elements. At this time, the touch panel is not touched by the finger, but is touched, for example, by a smooth plane. Specifically, the light emitting unit 1131e emits a light signal in a direction toward the touch panel, then the incident light signal is reflected to the nine photosensitive elements, and correspondingly, nine reflected light signals are obtained. The reflected signal map in Fig. 1D is obtained by concatenating the light intensity values of the nine reflected light signals into a curve. As can be seen from the reflected signal map of FIG. 1D, the variation of the intensity values of the reflected light signals received by the nine photosensitive elements is only related to the distance between the nine photosensitive elements and the light emitting unit (i.e., the light emitting unit 1131e), and the correlation, for example, is basically proportional to the distance, or satisfies a linear relationship. Because the fifth photosensitive element 1132e is closest to the light emitting unit 1131e, it receives the maximum reflected light intensity, while the reflected light intensities of the other photosensitive elements are sequentially weakened due to that the respective distances from the light emitting unit 1131e are getting farther in turn. In some examples, the reflected signal map of FIG. 1D can be used as the reference signal mentioned above.

FIG. 1E is a reflected signal map of the nine photosensitive elements (i.e., the first photosensitive element 1132a, the second photosensitive element 1132b, the third photosensitive element 1132c, the fourth photosensitive element 1132d, the fifth photosensitive element 1132e, the sixth photosensitive element 1132f, the seventh photosensitive element 1132g, the eighth photosensitive element 1132h and the ninth photosensitive element 1132i) in a case where the light signal emitted from the light emitting unit 1131e reaches the touch panel, and is reflected to the nine photosensitive elements when there is a finger touching on the touch panel. As can be seen from the reflected signal map of FIG. 1E, the light intensity values of the reflected light signals received by the nine photosensitive elements 1132 are related not only to the distances between the photosensitive elements 1132 and the light emitting unit (i.e., the light emitting unit 1131e), but also to the valley or ridge of the fingerprint on the touch panel at respective distances. If there is a ridge at a certain position, the intensity of the reflected light at the position is, for example, substantially unchanged, as compared with FIG. 1D; but if there is a valley at a certain position, the intensity of the reflected light at the position is, for example, weakened, as compared with FIG. 1D, which is different from a case in which a ridge is at the position. At least one embodiment of the present disclosure can find the fluctuation position of the attenuation regularity by comparison, to determine whether a valley or a ridge is at the positions corresponding to the nine photosensitive elements, and finally complete the fingerprint identification.

At least one embodiment of the present disclosure utilizes the principle that the reflected light signals received by the plurality of photosensitive elements 1132 are related not only to distances, but also to that whether a valley or ridge of the fingerprint is at the positions resulting in the reflected light signals, to perform fingerprint identification by receiving reflected light signals at a plurality of positions at different distances from the light emitting unit and analyzing the changing rule of these reflected light signals.

The fingerprint identification device 100 provided by at least one embodiment of the present disclosure can omit complex fingerprint identification circuits and simplify fingerprint identification algorithms.

A fingerprint identification device 100 provided by another embodiment of the present disclosure is described below with reference to FIG. 2. The fingerprint identification device 100 in the present embodiment further includes a light emitting control circuit 114 as compared with FIG. 1A and FIG. 1B.

The structure and function of the light emitting array 113 and the processor 116 included in the fingerprint identification device 100 of FIG. 2 are the same as those of the corresponding components in FIG. 1A and FIG. 1B, and details are not repeatedly described herein. In one example, the light emitting control circuit 114 and the processor 116 can be implemented by a same chip.

The light emitting control circuit 114 is configured to control the light emitting units 1131 in the light emitting array 113 to emit light in the fingerprint identification phase. For example, the light emitting control circuit 114 is further configured to drive different light emitting units 1131 to emit light at different times in the fingerprint identification phase; or configured to modulate the characteristics of the light signals of the plurality of light emitting units 1131 in the fingerprint identification phase.

In at least one embodiment, different light emitting units 1131 in the light emitting array 113 can be made to emit incident light signals of the same characteristic by the light emitting control circuit 114, or different light emitting units 1131 can be made to emit the incident light signals of different characteristics by the light emitting control circuit 114.

In at least one embodiment, the light emitting control circuit 114 can also control the plurality of light emitting units 1131 located in a same array 113 to emit incident light signals of different characteristics simultaneously, or to emit incident light signals of a same characteristic sequentially.

For example, in one fingerprint identification process, one of the light emitting units 113 may be controlled to emit light by the light emitting control circuit 114 (for example, only the light emitting unit 1131 located at a central position of the light emitting array 113 is controlled to emit light), alternatively, the plurality of light emitting units 1131 in the light emitting array 113 can also be controlled to emit light sequentially or to emit light simultaneously.

The embodiment of the present disclosure can control the light emitting timing and the light emitting characteristics of the light emitting unit 1131 by the light emitting control circuit 114, and at least two examples can be provided. For example, in a first example, the light emitting control circuit 114 controls the plurality of light emitting units 1131 in a same light emitting array to emit light of different characteristics, simultaneously. In a second example, the light emitting control circuit 114 controls the plurality of light emitting units 1131 in the same light emitting array to emit light of a same characteristic, sequentially. In these way, it is at least possible to distinguish each of the light emitting units 1131 by timing (i.e., time division operation mode), or to distinguish each of the light emitting units 1131 by light signal characteristics (for example, frequency division operation mode). Therefore, respective photosensitive elements 1132 use the processor 116 to complete the fingerprint identification process based on the distances from the corresponding light emitting unit 1131.

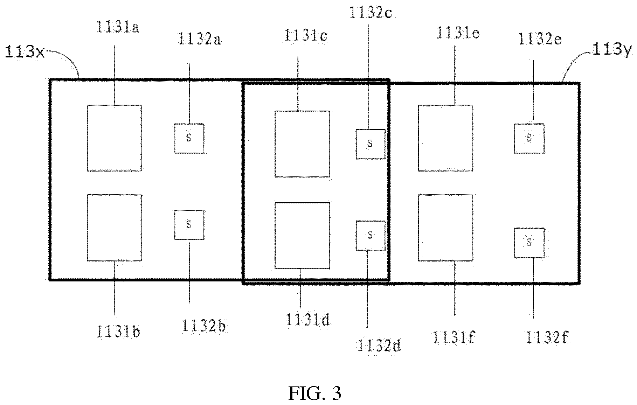

A light emitting array 113 provided by still another embodiment of the present disclosure will be described below with reference to FIG. 3. A first light emitting array 113x and a second light emitting array 113y provided in FIG. 3 are two adjacent light emitting arrays 113 arbitrarily selected from the plurality of light emitting arrays 113 of FIG. 1A. FIG. 3 shows a photosensitive element by using the symbol S.

Different from the above embodiments, the first light emitting array 113x and the second light emitting array 113y shown in FIG. 3 can share a plurality of photosensitive elements 1132 or share a plurality of light emitting units 1131, and can also share both a plurality of photosensitive elements 1132 and a plurality of light emitting units 1131 at the same time.

In FIG. 3, the first light emitting array 113x includes first light emitting units (1131a, 1131b), and the second light emitting array 113y includes second light emitting units (1131e, 1131f). In addition, the first light emitting array 113x and the second light emitting array 113y in FIG. 3 further include sharing light emitting units (1131c, 1131d).

For example, the numbers of the light emitting units and the photosensitive elements in the first light emitting array 113x and the second light emitting array 113y in FIG. 3 are exemplary, and the numbers of the light emitting units and the photosensitive elements in the sharing region are also exemplary. For example, the first light emitting array 113x can include only the light emitting units 1131a and 1131c, as well as the photosensitive elements 1132a and 1132c, and the second light emitting array 113y can include only the light emitting units 1131e and 1131c, as well as the photosensitive cells 1132e and 1132c, wherein the light emitting unit 1131c and the photosensitive unit 1132c are shared by both arrays.

The first photosensitive elements (1132a, 1132b) are respectively disposed at two positions of the first light emitting array 113x in FIG. 3, and the second photosensitive elements (1132e, 1132f) are also disposed at two positions of the second light emitting array 113y. Moreover, both of the first light emitting array 113x and the second light emitting array 113y further includes the shared photosensitive elements (1132c, 1132d). For example, the photosensitive elements in the sharing region, can detect the light emitted from the light emitting units in the array 113x when the array 113x is detected, and can detect the light emitted from the light emitting units in the array 113y when the array 113y is detected. For example, the light emitting units of the first light emitting array and the light emitting units of the second light emitting array have different light emitting frequencies or different light emitting timing sequences, which have no influence on the later data extraction and algorithm processing, so that the photosensitive elements can be efficiently utilized to obtain more accurate fingerprint information.

The shared light emitting units (1131c, 1131d) and the shared photosensitive elements (1132c, 1132d) described above are both located in the sharing area formed between the first light emitting array 113x and the second light emitting array 113y. The sharing region includes a part of the first positions and a part of the second positions, and the rest of the first and second positions are located in the non-sharing region (such as the first position where the photosensitive element 1132a is located and the first position where the photosensitive element 1132b is located). Herein, the "first position" and the "second position" are merely intended to distinguish the positions of the photosensitive elements in different light emitting arrays (the first light emitting array and the second light emitting array), and the "first" and "second" here are not to indicate any importance or sequence, etc.. For example, the "first position" indicates a position of each photosensitive element in the first light emitting array, and the "second position" indicates a position of each photosensitive element in the second light emitting array. Taking the first light emitting array 113x as an example, four photosensitive elements are respectively located at four positions of "upper left", "lower left", "upper right" and "lower right" in the first light emitting array. However, the embodiments of the present disclosure are not limited thereto, and photosensitive elements can be disposed at more positions in each of the light emitting arrays.

The shared photosensitive elements (1132c, 1132d) in FIG. 3 is not only capable of receiving and detecting a reflected light signal caused by a light emitting signal from the first light emitting array 113x, but also capable of receiving and detecting a reflected light signal caused by a light emitting signal from the second light emitting array 113y. For example, when the light signal emitted from the first light emitting array 113x is a light signal having a first characteristic and the light signal emitted from the second light emitting array 113y is a light signal having a second characteristic, the shared photosensitive elements (1132c, 1132d) have at least a function of receiving the light signal having the first characteristic and the light signal having the second characteristic. For example, the shared photosensitive elements can include a photoelectric detector that integrates two or more different characteristics to detect and receive light signals of various characteristics.

It should be noted that the embodiments of the present disclosure do not limit the number of photosensitive elements 1132 shared by the first light emitting array 113x and the second light emitting array 113y. In different embodiments, the number and position of the shared photosensitive elements 1132 can be set as needed, and the number and position of the shared light emitting units 1131 can also be set as needed.

The embodiments of the present disclosure can reduce the number of components for fingerprint identification by sharing the photosensitive elements 1132, which facilitates miniaturization or integration of the device. At the same time, the light emitting units 1131 can be more fully utilized and the accuracy of fingerprint identification can be improved.

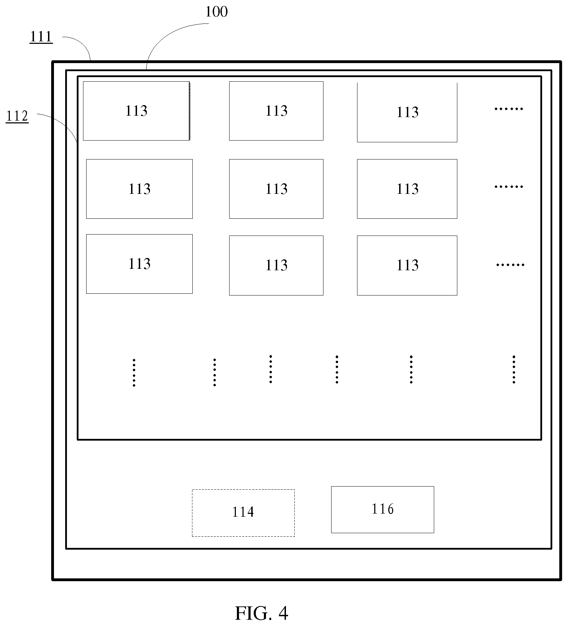

A display panel 111 provided by at least one embodiment of the present disclosure is described below with reference to FIG. 4. The display panel 111 in the present embodiment can be used for realizing at least image display function and fingerprint identification function.

The display panel 111 in FIG. 4 sets the plurality of light emitting arrays 113 included in the fingerprint identification device 100 described above in a display region 112, and sets the light emitting control circuit 114 and the processor 116 included in the fingerprint identification device 100 described above in a non-display region. The embodiments of the present disclosure do not limit the setting region of the light emitting control circuit 114 and the processor 116 on the display panel 111. For example, the embodiments of the present disclosure can set at least one of the light emitting control circuit 114 and the processor 116 in the display region, for example, place it under the display array.

At least one embodiment of the present disclosure provides a display device, which includes the above-described display panel 111. The display device can be implemented as any product or component having a display function, such as a mobile phone, a tablet computer, a television, a display, a notebook computer, a digital photo frame, a navigator, etc..

The specific structure of the light emitting array 113 in FIG. 4 can be referred to FIG. 1B, and details are not described herein.

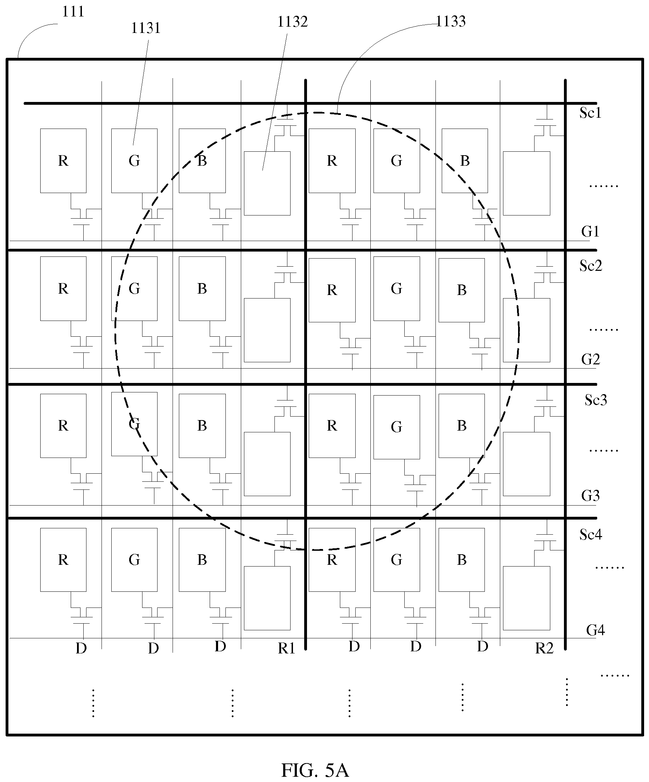

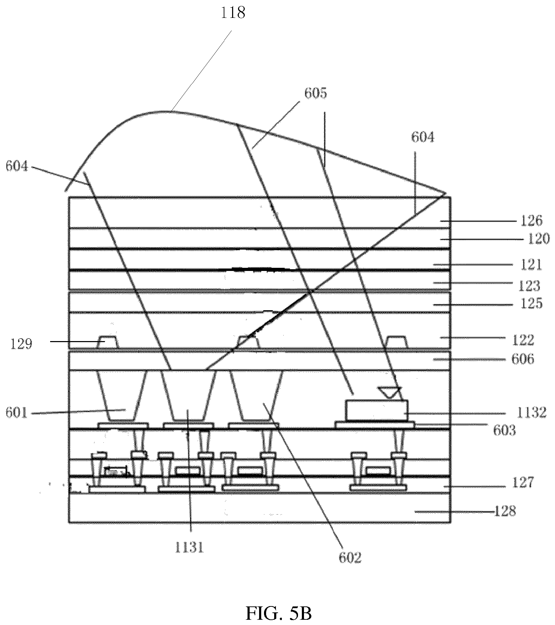

An exemplary structure of the display panel 111 is described by taking an OLED display panel as an example and with reference to FIG. 5Aand FIG. 5B.

Each pixel on the OLED display panel 111 of FIG. 5A includes three sub-pixels, a red sub-pixel R, a green sub-pixel G and a blue sub-pixel B respectively, and each sub-pixel is connected to a scan line (i.e., G1, G2, G3, G4, ..., in FIG. 5A) through a transistor switch. The green sub-pixel G included in each pixel in FIG. 5A can be used as one light emitting unit 1131 for fingerprint identification. In an image display phase, these green sub-pixels are used to output grayscale signals corresponding to the image. In a fingerprint identification stage, these green sub-pixels G are used to emit incident light signals of predetermined characteristics for fingerprint identification.

The OLED display panel 111 in FIG. 5A further includes the plurality of photosensitive elements 1132, each of which is connected to a touch scan line (i.e., Sc1, Sc2, Sc3, Sc4, ..., in FIG. 5A) through a transistor switch. As described above, the photosensitive elements 1132 can be used at least for sensing a light signal of a predetermined wavelength range (e.g., one of the characteristics in the above or below embodiments). Herein, the photosensitive elements 1132 are used to sense the green light emitted from the light emitting units 1131 for fingerprint identification.

How to set the sub-pixels shown in FIG. 5A and photosensitive elements described above in the display panel is exemplarily described below with reference to FIG. 5B.

FIG. 5B exemplarily provides a longitudinal cross-sectional view of the OLED display panel 111. In some examples, FIG. 5B embeds a touch panel function into pixels by using an in-cell touch control technology. For example, FIG. 5B embeds touch sensors (e.g., the photosensitive elements 1132) in a pixel layer on a TFT array substrate. For example, the photosensitive elements 1132 are built into the interior of the OLED display device and disposed in the same layer as the sub-pixels.

The OLED display panel 111 in FIG. 5B is provided with a red sub-pixel 601, a green sub-pixel G (serving as the light emitting unit 1131 in the fingerprint identification phase), a blue sub-pixel 602, and a photosensitive element 1132 on a light emitting layer. The photosensitive element 1132 in FIG. 5B is disposed in the same layer as each sub-pixel. In the fingerprint identification phase, the light emitting unit 1131 in FIG. 5B emits an incident light signal 604 to a valley position on the fingerprint, then the incident light signal 604 is reflected by the operating body 118 to obtain a reflected light signal 605, and then the photosensitive unit 1132 receives the reflected light signal 605 for fingerprint identification. In some examples, the photosensitive element 1132 can employ a PIN photodiode shown in FIG. 5B. For example, the PIN photodiode has a strong photoelectric effect on green light, blue light, red light, or a mixed color light of three primary colors in a certain proportion.

In some examples, the OLED display panel 111 can further include at least a thin film encapsulation layer 122, a polarizer 121, a first optical adhesive layer 120, a touch control film layer 123, a second optical adhesive layer 125, a glass cover plate 126, a low temperature poly-silicon layer 127, a substrate (for example, a flexible substrate) 128, a support column 129, an anode 603, and a cathode 606, etc., as shown in FIG. 5B, and detailed structures of these layers or units can be referred to relevant literature, which will not be described herein.

Referring to FIG. 5B, the green light emitted from the light emitting unit 1132 (i.e., the green sub-pixel in FIG. 5B) is irradiated to the position of a valley or ridge on the operating body 118 (for example, a finger or a palm), then reflected by the position of the valley or ridge and irradiated to the photosensitive element 1132. And then, the photosensitive element 1132 photo-electrically converts the reflected light to obtain a current signal.

The structure of the OLED display panel 111 will be described below in conjunction with FIG. 5A. As shown in FIG. 5A, a plurality of data lines D and a plurality of photosensitive reading lines R are further disposed on the OLED display panel 111. In the image display phase, the plurality of data lines D transmit image grayscale signals to the respective sub-pixels. In the fingerprint identification phase, the plurality of data lines D transmit light emitting control signals to the light emitting units 1131 (i.e., the plurality of green sub-pixels in FIG. 5A) to control the light emitting units 1131 to emit a light signal of a predetermined characteristic. In the fingerprint identification phase, the photosensitive reading lines R read an electric signal of a corresponding intensity obtained from sensing the reflected light signals from the photosensitive elements 1132.

The OLED display panel 111 in FIG. 5A places the plurality of photosensitive elements 1132 one by one at a gap between a plurality of OLED pixels. For example, the plurality of photosensitive elements 1132 are disposed on a region (for example, a black matrix) between the plurality of OLED pixels.

It should be noted that, in a case where the plurality of photosensitive elements 1132 are located at a gap between the plurality of OLED pixels, the original black matrix at the gap between the plurality of OLED pixels can be at least partially replaced. Moreover, in a case where the plurality of photosensitive elements 1132 are located one by one on the black matrix between the plurality of OLED pixels, the plurality of photosensitive elements 1132 can be located in an original protective layer of the black matrix. The protective layer in the black matrix is used to prevent oxidation of OLED pixels caused by impurities such as water, etc..

The working process of the OLED display panel 111 in FIG. 5A for display and fingerprint identification will be described below.

Assuming that the transistor switches connected to the first row of sub-pixels in FIG. 5A are turned on during an operation period T1. It should be noted that the embodiment of the present disclosure divides the period T1 into a former period (for example, the first three quarters of the period T1) and a latter period (for example, the last quarter of the period T1). The former period is used for image display, and the latter period is used for fingerprint identification.

In the former period, the grayscale data for image display is transmitted to the sub-pixels of the first row through the data line D, and image display is performed. In the latter period, the light emitting control signals for controlling light emission of the light emitting units 1131 are transmitted to the light emitting units 1131 of the first row (here, for example, transmitted to the green sub-pixels of the present row) through the data line D, so that the corresponding light emitting units 1131 emit incident light signals outward. At the same time, the switches (i.e., the transistors connected to the photosensitive elements 1132 in FIG. 5A) connected to the photosensitive elements 1132 are turned on through the first touch scanning signal line (for example, Sc1), so as to read the reflected light signal received by each photosensitive element 1132 through the photosensitive reading line R. For example, in the present example, the photosensitive read line R is used to read a current signal, which is obtained through converting the received reflected light signal by the photosensitive element 1132.

It should be understood by those skilled in the art that dividing the above period T1 into four quarters to control image display and fingerprint identification is for illustrative purposes only. The embodiments of the present disclosure do not limit how image display and fingerprint recognition are multiplexed for a period of time. For example, for a display device 111 that needs to perform fingerprint identification frequently, a longer continuous period can be set for the display device 111 to be used for fingerprint identification; and for a display device 111 that is used for display for a large amount of time, a longer continuous period can be set for display device 111 to be used for image display.

It should be noted that the embodiments of the present disclosure do not limit the use of time division multiplexing to control the display panel 111 to perform the two functions of display and fingerprint identification. In some other embodiments of the present disclosure, fingerprint identification can also be performed by sensing a touch action and determining a corresponding touch region (for example, a partial touch region 1133 is shown in FIG. 5A) in advance, and then activating the plurality of light emitting units 1131 corresponding to the partial touch region 1133 to emit incident light signals.

In addition, the above OLED display panel 111 is for illustrative purposes only, and the embodiments of the present disclosure do not limit the type of the display panel 111. For example, the display panel 111 of the embodiments of the present disclosure can also be an LCD display panel or the like. For example, light emitting units for emitting detective light can be additionally provided in pixels of the LCD display panel. For example, such light emitting units can be an emitting element that emits visible or invisible light as long as such light can be detected by the photosensitive element.

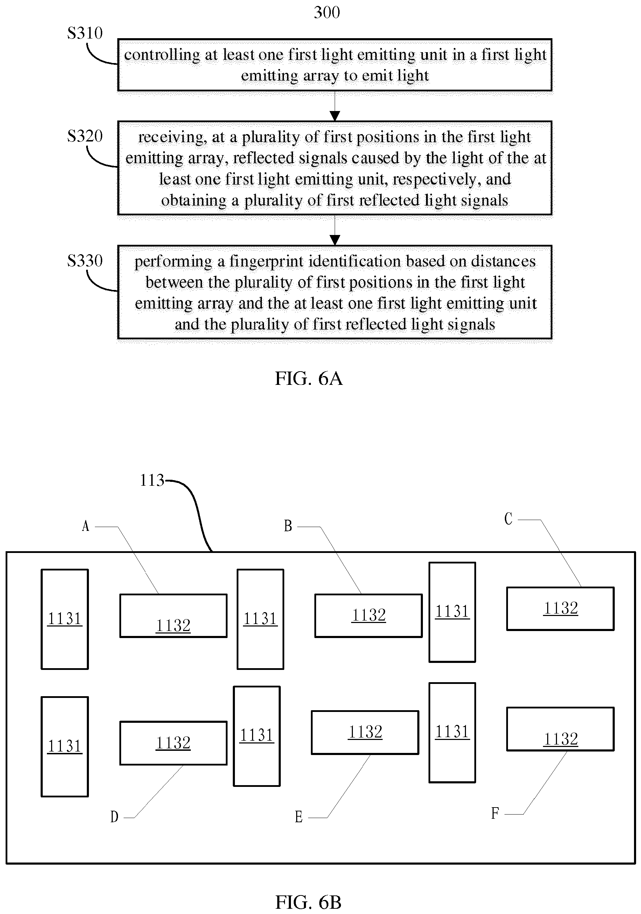

A fingerprint identification method 300 of an embodiment of the present disclosure will be described below with reference to FIG. 6A and FIG. 6B.

In order to describe a plurality of embodiments included in the fingerprint identification method 300, one of the light emitting arrays 113 in FIG. 1A is named as a first light emitting array, and a plurality of light emitting units located in the first light emitting array are named as first light emitting units. It should be understood that the first light emitting array involved in FIG. 6A is the same as the light emitting array 113 shown in the above embodiments (for example, FIG. 1A), and the first light emitting units involved in FIG. 6A are the same as the light emitting units 1131 in FIG. 1B.

As shown in FIG. 6A, the fingerprint identification method 300 can include the following operations:
operation S310: controlling at least one first light emitting unit (i.e., any one of the light emitting units in FIG. 1A) in a first light emitting array (i.e., any one of the light emitting arrays in FIG. 1A) to emit light;
operation S320: receiving, at a plurality of first positions (e.g., the positions where the photosensitive elements 1132 in FIG. 1B are located) in the first light emitting array, reflected signals caused by the light of the at least one first light emitting unit, respectively, and obtaining a plurality of first reflected light signals;
operation S330: performing a fingerprint identification based on distances between the plurality of first positions in the first light emitting array and the at least one first light emitting unit and the plurality of first reflected light signals.

Steps included in an example of the fingerprint identification method 300 in a case where operation S310 controls one first light emitting unit in the first light emitting array to emit light are described below.

Operation S310 is executed to control one first light emitting unit in the first light emitting array to emit light. Then, operation S320 is executed to receive the reflected signals caused by the light of the first light emitting unit at L (for example, L is an integer equal to or greater than 2) different positions in the first light emitting array, respectively, so as to obtain L first reflected light signals. Finally, operation S330 performs a fingerprint identification based on L distances (L distances, that is, distances between L different positions and the first light emitting unit) and the L first reflected light signals.

A process of controlling one first light emitting unit to emit light for fingerprint identification is exemplarily described below with reference to FIG. 6B.

As shown in FIG. 6B, the light emitting array 113 (i.e., the first light emitting array in FIG. 6A) includes six light emitting units 1131 (i.e., the first light emitting units in FIG. 6A) and six photosensitive elements 1132, wherein the six photosensitive elements 1132 are disposed in one-to-one correspondence with the six first light emitting units. Each photosensitive element 1132 is located at a gap between two first light emitting units.

The plurality of first positions involved in the above operation S320 are position A, position B, position C, position D, position E, and position F where the six photosensitive elements 1132 in FIG. 6B are respectively located.

Operation S310 is executed to cause one of the six light emitting units 1131 (e.g., the light emitting unit in the first row and the second column) in FIG. 6B to emit an incident light signal of a first characteristic (here, for example, green light) in the direction toward the touch panel.

The incident light signal of the first characteristic reaches the touch panel, and then is reflected by an operating body (for example, the operating body can be a finger or a palm, etc.) to reach position A, position B, position C, position D, position E, and position F in FIG. 6B.

Operation S320 is performed to receive the reflected light signals by the six photosensitive elements 1132 (for example, photosensitive sensors) at the six positions, and convert the received reflected light signal into current signals to obtain six first reflected light signals.

Operation S330 is performed to combine the six first reflected light signals, and six distances between the six first positions and the one of the light emitting units involved in operation S310 to identify the fingerprint information.

In the above embodiments of the present disclosure, fingerprint identification is performed by controlling one first light emitting units in the first light emitting array to emit light, so that the process of fingerprint identification can be accomplished quickly and the sensitivity of fingerprint identification can be improved.

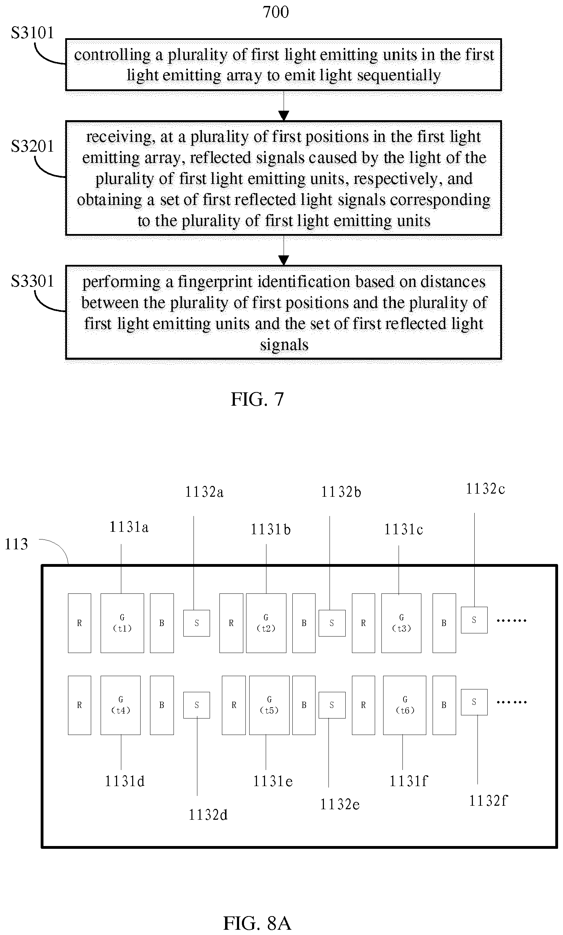

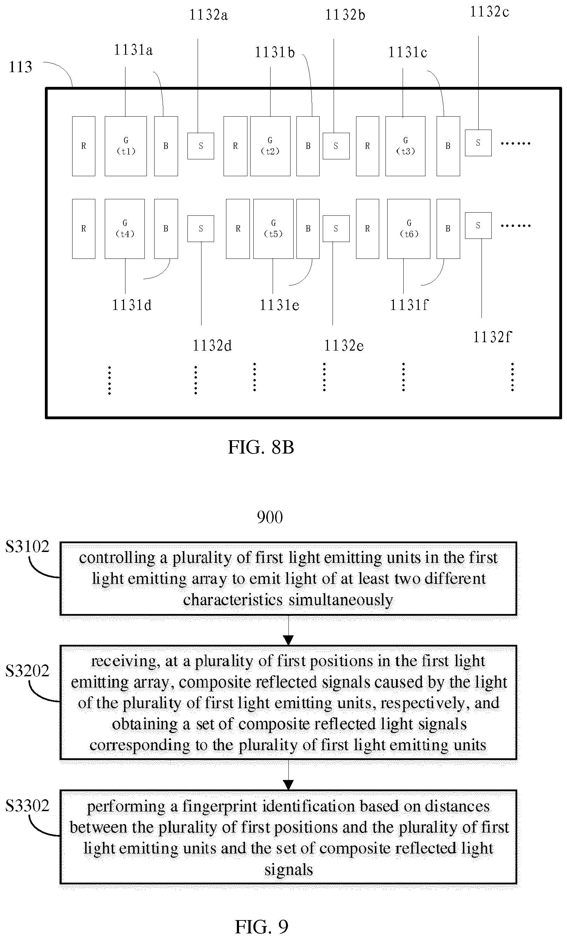

Next, steps included in the fingerprint identification method 300 in a case where operation S310 controls a plurality of first light emitting units in the first light emitting array to emit light will be described with reference to FIG. 7 and FIG. 9.

The fingerprint identification method 700 provided in FIG. 7 differs from the fingerprint identification method 300 in FIG. 6A in that the fingerprint identification method 700 in FIG. 7 is used to further define how to cause a plurality of first light emitting units in the first light emitting array to emit light. For example, the present embodiment performs a fingerprint identification by causing a plurality of first light emitting units to emit light sequentially.

The fingerprint identification method 700 in FIG. 7 includes the following operations:
operation S3101: controlling a plurality of first light emitting units in the first light emitting array to emit light sequentially;
operation S3201: receiving, at a plurality of first positions in the first light emitting array, reflected signals caused by the light of the plurality of first light emitting units, respectively, and obtaining a set of first reflected light signals corresponding to the plurality of first light emitting units;
operation S3301: performing a fingerprint identification based on distances between the plurality of first positions and the plurality of first light emitting units and the set of first reflected light signals.

The plurality of first light emitting units in the present embodiment emit light of a same characteristic. The characteristic here can include at least one selected from the group consisting of intensity, phase and frequency. For example, in at least one embodiment, the characteristic includes wavelength or intensity. For example, in one embodiment, the plurality of first light emitting units emit light of a same wavelength. For example, in one embodiment, the plurality of first light emitting units emit light of a same wavelength and a same intensity. It should be noted that, for the plurality of first light emitting units to emit light of a same frequency characteristic, it is not that the frequency values of the light signals emitted from the plurality of first light emitting units are absolutely equal, but rather that the frequencies of the light signals emitted from the first light emitting units all belong to a predetermined range. Light signals of this predetermined range can be sensed by the photosensitive elements to generate corresponding electrical signals.

Operation S3101 in FIG. 7 further includes, when controlling each of the first light emitting units to emit light, controlling one first light emitting unit to emit a light signal of one characteristic, or controlling one first light emitting unit to emit light signals of at least two characteristics. This is further illustrated below in conjunction with FIG. 8A, FIG. 8B and two examples, wherein a symbol S is used to indicate a photosensitive element in FIG. 8A and FIG. 8B.

For example, in one example, operation S3101 in FIG. 7 controls a plurality of first light emitting units in the first light emitting array to emit light signals of one characteristic, sequentially. For example, as shown in FIG. 8A, each pixel on the display panel includes a red sub-pixel R, a green sub-pixel G, and a blue sub-pixel B. The six first light emitting units (1131a, 1131b, 1131c, 1131d, 1131e, and 1131f) in FIG. 8A are six green sub-pixels on the display panel. Operation S3101 in FIG. 7 is executed such that the first light emitting unit 1131a in FIG. 8A emits a green light signal at time t1, the first light emitting unit 1131b emits a green light signal at time t2, the first light emitting unit 1131c emits a green light signal at time t3, the first light emitting unit 1131d emits a green light signal at time t4, the first light emitting unit 1131e emits a green light signal at time t5, and the sixth light emitting unit 1131f emits a green light signal at time t6. The above-mentioned time t1, time t2, time t3, time t4, time t5 and time t6, are only used to indicate six different times, and the embodiment of the present disclosure does not limit a relative order of the six times. Thereafter, a first set of reflected light signals corresponding to 11, a second set of reflected light signals corresponding to t2, and so on, are obtained at the plurality of first positions, until a sixth set of reflected light signals corresponding to time t6 are obtained.

For example, in another example, operation S3101 of FIG. 7 controls one first light emitting unit to emit light of at least two different characteristics, simultaneously. For example, as shown in FIG. 8B, each pixel on the display panel includes a red sub-pixel R, a green sub-pixel G, and a blue sub-pixel B. The six first light emitting units (1131a, 1131b, 1131c, 1131d, 1131e, and 1131f) in FIG. 8B each include two sub-pixels, that is, a green sub-pixel and a blue sub-pixel. Operation S3101 in FIG. 7 is executed such that the first light emitting unit 1131a in FIG. 8B simultaneously emits a green light signal and a blue light signal at time t1, the first light emitting unit 1131b simultaneously emits a green light signal and a blue light signal at time t2, the first light emitting unit 1131c simultaneously emits a green light signal and a blue light signal at time t3, the first light emitting unit 1131d simultaneously emits a green light signal and a blue light signal at time t4, the first light emitting unit 1131e simultaneously emits a green light signal and a blue light signal at time t5, and the sixth light emitting unit 1131f simultaneously emits a green light signal and a blue light signal at time t6. The above-mentioned time t1, time t2, time t3, time t4, time t5 and time t6, are only used to indicate six different times, and the embodiment of the present disclosure does not limit a relative order of the six times.

Thereafter, the above two examples will continue to execute operation S3201 such that the plurality of photosensitive elements in FIG. 8A and FIG. 8B (i.e., the first photosensitive element 1132a, the second photosensitive element 1132b, the third photosensitive element 1132c, the fourth photosensitive element 1132d, the fifth photosensitive element 1132e and the sixth photosensitive element 1132f) receive reflected light signals of different characteristics simultaneously emitted at respective times, so as to obtain corresponding different electrical signals at the same time. Finally, operation S3301 is executed to perform fingerprint identification on the region where the light emitting array 113 is located based on the reflected light signals.

For example, in some embodiments, whether to adopt the example corresponding to FIG. 8A or the example corresponding to FIG. 8B can be decided depending on the photosensitive characteristics of the photosensitive elements 1132.

It should be noted that the embodiments of the present disclosure do not limit the types of light signals emitted from the first light emitting units corresponding to the example illustrated in FIG. 8B.

In at least one embodiment of the present disclosure, light intensity values of the plurality of reflected light signals received a plurality of times by the photosensitive elements can be further superimposed. Using a superimposed signal for fingerprint identification can further improve the identification accuracy.

A superposition algorithm is briefly described below in combination with Table 1, Table 2, Table 3 and FIG. 1C.

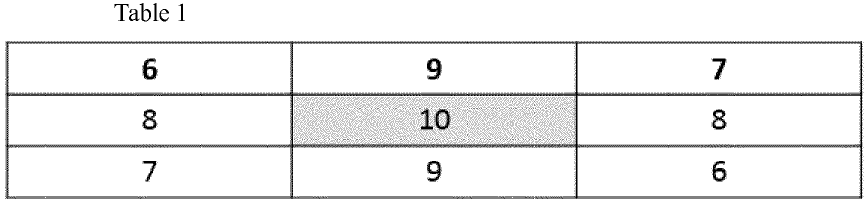

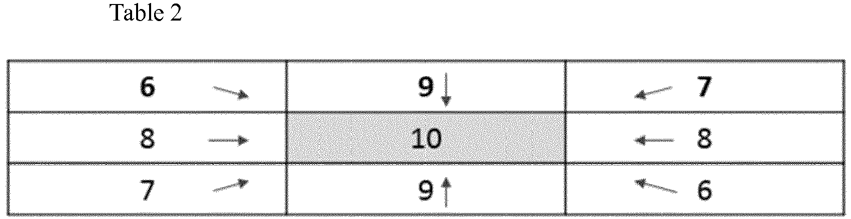

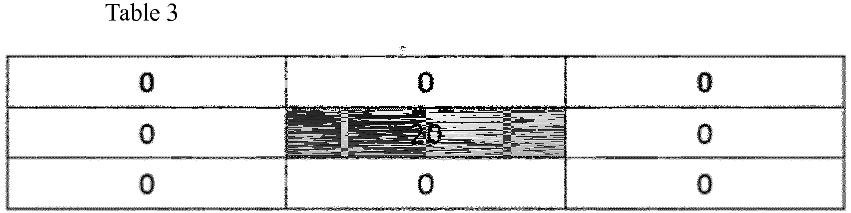

The nine light emitting units in FIG. 1C (i.e., the light emitting units 1131a, 1131b, 1131c, 1131d, 1131e, 1131f, 1131g, 1131h and 1131i) are controlled to emit light sequentially, then the central photosensitive element 1132e in FIG. 1C receives the intensity values of the nine reflected light signals as shown in Table 1 above (the unit of the light intensity values is omitted here, or they are ratios to a same reference value).

In some examples, in order to further increase the light intensity value of the reflected signal perceived by the photosensitive element 1132e at the central position, a received maximum light intensity value can be used as a reference and the reflected light signals received by the photosensitive element 1132e for the remaining eight times can be superimposed to the maximum value (as indicated by the arrows in Table 2). For example, in each of the light emitting arrays, a photosensitive element having the maximum received light intensity value (for example, a photosensitive element closest to the light emitting unit) can be selected as a superimposing target, and the reflected light signals of the photosensitive elements around this photosensitive element can be superimposed on the light intensity value of this photosensitive element. However, the embodiments of the present disclosure are not limited thereto, and the superimposition can be performed on other photosensitive elements.

Table 3 above shows that after the superposition processing, the intensity value of the final reflected light signal received by the central photosensitive element 1132e (i.e. the fifth photosensitive element 1132e in FIG. 1C) is changed from the initial 10 to 20. Thereafter, the superimposed light intensity 20 is read for fingerprint identification.

In some embodiments, a plurality of light emitting arrays can be selected for fingerprint identification. For example, the light intensity values of the reflected light signals of each light emitting array can be superimposed on one photosensitive element by the above-mentioned superposition processing method, and then the fingerprint identification is performed based on the positions of different light emitting arrays and the superimposed light intensity values corresponding to the different light emitting arrays.

It should be noted that, in the embodiments of the present disclosure, it may need to ensure that the information of the valley and the ridge of the fingerprint does not crosstalk when performing the superimposing operation. The embodiments of the present disclosure do not limit whether the received maximum light intensity value is taken as a reference or not, and any other smaller light intensity value can be selected as a reference to superimpose the light intensity values of the remaining times on the smaller light intensity value, so as to obtain the superimposed light intensity value as a basis for fingerprint identification.

The present disclosure makes the plurality of first light emitting units in the first light emitting array emit light sequentially through the embodiment of FIG. 7, and obtains multiple sets (for example, the number of sets is the same as the number of the first light emitting units) of reflected light signals, wherein each set of reflected light signals includes a plurality of reflected light signals (for example, the number of the reflected light signals is equal to the number of the photosensitive elements disposed at the first positions). For example, the first light emitting units can be distinguished by time, and the distances between the first light emitting unit that is emitting light each time and a plurality of first positions can be determined, and finally, the fingerprint identification can be performed based on the plurality of distances and the multiple sets of reflected light signals.

The accuracy of fingerprint identification can be improved by using a plurality of light emitting units of the embodiments of the present disclosure to emit light sequentially to obtain multiple sets of reflected light signals for fingerprint identification.

A fingerprint identification method 900 provided by still another embodiment of the present disclosure is described below with reference to FIG. 9.

The fingerprint identification method 900 provided in FIG. 9 differs from the fingerprint identification method 300 in FIG. 6A in that the fingerprint identification method 900 in FIG. 9 is also used to further define how to cause a plurality of first light emitting units in the first light emitting array to emit light. Specifically, the present embodiment performs fingerprint identification by causing a plurality of first light emitting units to emit light simultaneously, which is different from the embodiment of FIG. 7 in which a plurality of first light emitting units are controlled to emit light sequentially.

As shown in FIG. 9, the fingerprint identification method 900 can include the following operations:
operation S3102: controlling a plurality of first light emitting units in the first light emitting array to emit light of at least two different characteristics simultaneously;
operation S3202: receiving, at a plurality of first positions in the first light emitting array, composite reflected signals caused by the light of the plurality of first light emitting units, respectively, and obtaining a set of composite reflected light signals corresponding to the plurality of first light emitting units;
operation S3302: performing a fingerprint identification based on distances between the plurality of first positions and the plurality of first light emitting units and the set of composite reflected light signals.

The light signals of different characteristics in operation S3102 can include light signals of different frequencies, light signals of different intensities, or light signals of different phases. For example, light signals of different frequencies can be light signals of different colors. Furthermore, the so-called different frequencies, different intensities or different phases in some embodiments refer to that light signals being emitted belong to different predetermined ranges. For example, operation S3102 in FIG. 9 controls N pixels in the first light emitting array to emit N different characteristics of light simultaneously, where N is an integer greater than one. N is a total number of the first light emitting units.

Operation S3102 causes the plurality of first light emitting units to emit light of at least two different characteristics simultaneously, so that the light of the two characteristics is reflected to the plurality of first positions (for example, the position where the photosensitive elements 1132 are located), and reflected light signals of composite light signals of the light signals having at least two characteristics can be received at the plurality of first positions.

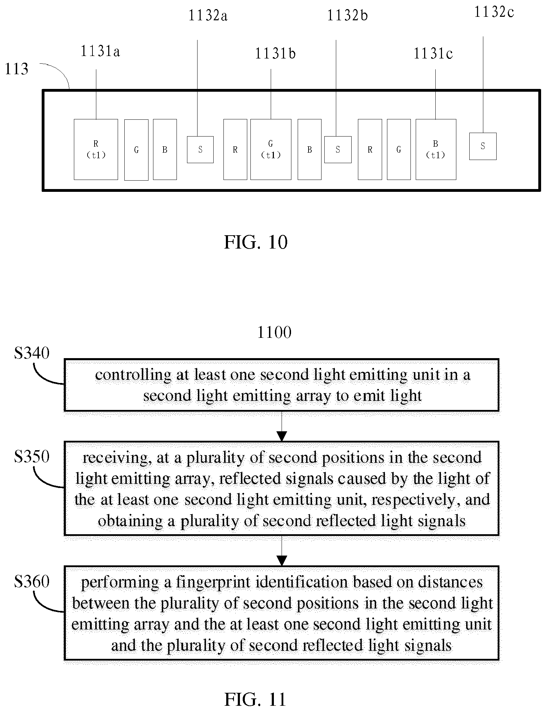

In at least one embodiment, operation S3302 can employ a decomposition algorithm to decompose M composite reflected light signals received at M (M is greater than or equal to 2) the first positions, and each of the composite reflected light signals can be decomposed into light signals of K characteristics (K is greater than or equal to 2 and K represents the types of light signals emitted from all of the light emitting units in the first light emitting array). Therefore, reflected light signals of the K characteristics, that is, light signal of a first characteristic, light signal of a second characteristic, ..., light signal of a Kth characteristic, are obtained by the decomposition algorithm at each of the first positions. Then, a first fingerprint identification is performed by using the light signals of the first characteristic of the M first positions, a second fingerprint identification is performed by using the light signals of the second characteristic of the M first positions, ..., and so on, until a Kth fingerprint identification is completed by using the reflected light signals of the Kth characteristic, and finally results of the K times of fingerprint identifications are integrated as a final result of fingerprint identification. The fingerprint identification method 900 in FIG. 9 is exemplarily described below with reference to the structure of FIG. 10, and the photosensitive element is denoted by the symbol S in FIG. 10.

The light emitting array 113 in FIG. 10 (i.e., the first light emitting array of FIG. 9) includes three pixels on the display panel 111, and each pixel further includes a red sub-pixel R, a green sub-pixel G, and a blue sub-pixel B, respectively. In the present example, the red sub-pixel R of the first pixel is used as a first light emitting unit 1131a, the green sub-pixel G of the second pixel is used as a first light emitting unit 1131b, and the blue sub-pixel of the third pixel is used as a first light emitting unit 1131c, respectively.

Operation S3102 in FIG. 9 is executed on the light emitting array 113 in FIG. 10 such that the three first light emitting units in the light emitting array 113 can be controlled to emit light of three different characteristics (that is, the first light emitting unit 1131a emits a red light, the first light emitting unit 1131b emits a green light, and the first light emitting unit 1131c emits a blue light) simultaneously (as at time t1 of FIG. 10). Thereafter, operation S3202 is performed such that reflected light signals of the composite light caused by light simultaneously emitted by the three first light emitting units are respectively received at a plurality of first positions in the first light emitting array 113 (i.e., the positions where the first photosensitive element 1132a, the second photosensitive element 1132b, and the third photosensitive element 1132c are located, respectively, as shown in FIG. 10), so as to obtain a set of composite reflected light signals corresponding to the three first light emitting units; and operation S3302 is executed to perform fingerprint identification based on distances between the plurality of first positions and the plurality of first light emitting units and the set of composite reflected light signals.

The embodiment of the present disclosure obtains a plurality of fingerprint identification results by controlling a plurality of first light emitting units in one light emitting array 113 to emit light signals of different characteristics simultaneously, and then decomposing the composite reflected light signals. Finally, the final result of fingerprint identification is obtained based on the plurality of fingerprint identification results , which improves the accuracy of fingerprint identification.

A fingerprint identification method 1100 according to an embodiment of the present disclosure is described below with reference to FIG. 11. The fingerprint identification method 1100 can be applied to another light emitting array (i.e., a second light emitting array in FIG. 11) different from the first light emitting array on the display panel 111 based on the fingerprint identification method shown in FIG. 6A. The embodiments of the present disclosure can at least achieve fingerprint identification in a large region (e.g., full-screen fingerprint identification) by controlling two or more light emitting arrays to emit light.

It should be noted that the second light emitting array in FIG. 11 and the first light emitting array described in the above embodiments are both the light emitting arrays 113 on the fingerprint identification device 100 shown in FIG. 1A. A plurality of second light emitting units included in the second light emitting array can also refer to the plurality of light emitting units 1131 in FIG. 1B, and therefore, details are not described herein.

The fingerprint identification method 1100 provided in FIG. 11 includes the following operations in addition to the steps in FIG. 6A:
operation S340: controlling at least one second light emitting unit in a second light emitting array to emit light;
operation S350: receiving, at a plurality of second positions in the second light emitting array, reflected signals caused by the light of the at least one second light emitting unit, respectively, and obtaining a plurality of second reflected light signals;
operation S360: performing a fingerprint identification based on distances between the plurality of second positions in the second light emitting array and the at least one second light emitting unit and the plurality of second reflected light signals.

The meanings of the plurality of second positions can refer to the plurality of first positions described in the above-mentioned embodiments, and details are not described herein.

Specific execution details of operation S340 in FIG. 11 are the same as those of operation S310 in FIG. 6A, FIG. 7 and FIG. 9, specific execution details of operation S350 are the same as those of operation S320 in FIG. 6A, FIG. 7 and FIG. 9, specific execution details of operation S360 are the same as those of operation S330 in FIG. 6A, FIG. 7 and FIG. 9, and details are not described herein.

In addition, operation S340 in FIG. 11 can be executed simultaneously with operation S310 of the above embodiments, or can be executed after the above embodiments complete the execution of operation S330. That is, the second light emitting array in FIG. 11 can perform fingerprint identification simultaneously with the first light emitting array of the above embodiments, or can activate a fingerprint identification after the first light emitting array completes a fingerprint identification process.

Moreover, in some embodiments, the second light emitting array in FIG. 11 can work independently of the first light emitting array of the above-described embodiments. For example, assuming that the first light emitting array controls only one first light emitting unit to emit light during fingerprint identification, the second light emitting array can control two or more second light emitting units to emit light of different characteristics simultaneously or to emit light of a same characteristic sequentially. In some other embodiments, the operations of the first light emitting array and the second light emitting array can be related to each other (for example, for a case where the first light emitting array in FIG. 3 and the second light emitting array have shared photosensitive elements), specifically with reference to the description of the following example.

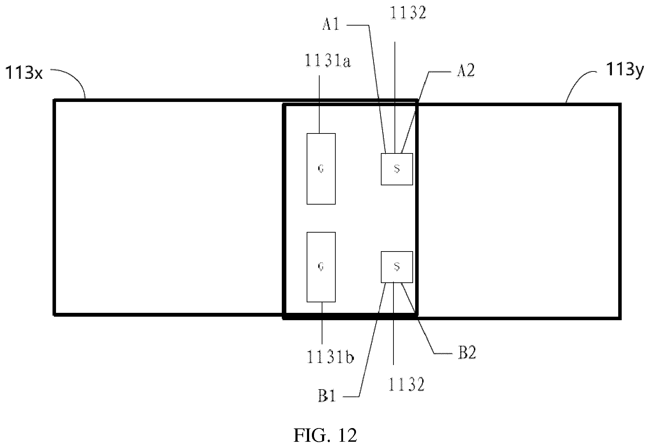

A fingerprint identification method provided by still another embodiment of the present disclosure is described below with reference to FIG. 12, and the photosensitive element is denoted by the symbol S in FIG. 12.

FIG. 12 differs from FIG. 3 in that the light emitting units in FIG. 12 are green sub-pixels G on the display panel 111. For the light emitting units 1131 and the photosensitive elements that are not shared in the first light emitting array 113x and the second light emitting array 113y, specific reference can be made to FIG. 3.

In at least one embodiment, the fingerprint identification method further includes controlling the first light emitting units (i.e., the light emitting units 1131a and the light emitting unit 1131b in FIG. 12) and the second light emitting units (i.e., the light emitting unit 1131a and the light emitting unit 1131b in FIG. 12) at the same positions (i.e., the positions where the light emitting unit 1131a and the light emitting unit 1131b are located in FIG. 12) in the first light emitting array (i.e., 113x of FIG. 12) and the second light emitting array (i.e., 113y of FIG. 12) to emit light at a same time, wherein the first light emitting array (i.e., 113x of FIG. 12) and the second light emitting array (i.e., 113y of FIG. 12) overlap partially with each other such that a part of the first positions overlap with a part of the second positions (for example, in FIG. 12, the first position A1 and the second position A2 coincide, and the first position B1 and the second position B2 coincide).

It should be noted that the fingerprint identification method of sharing photosensitive elements in FIG. 12 can further include the steps listed in the following examples.

In some examples, the first light emitting array (e.g., 113x of FIG. 12) and the second light emitting array (e.g., 113y of FIG. 12) can be controlled to emit light signals of a same characteristic sequentially. For example, the first light emitting unit located at the center position in the first light emitting array (e.g., 113x of FIG. 12) can be controlled to emit a light signal x at time t1, and the second light emitting unit located at the center position in the second light emitting array (e.g., 113y of FIG. 12) can be controlled to emit a light signal x at time t2. It should be noted that the present example is also applicable to a case of more than two light emitting arrays. That is, each light emitting array in a plurality of light emitting arrays can be controlled to emit light of a same characteristic sequentially.

In some other examples, the first light emitting array (e.g., 113x of FIG. 12) and the second light emitting array (e.g., 113y of FIG. 12) can be controlled to emit light signals of different characteristics simultaneously. For example, the first light emitting unit located at the center position in the first light emitting array (e.g., 113x of FIG. 12) can be controlled to emit a green light signal at time t1, and the second light emitting unit located at the center position in the second light emitting array (e.g., 113y of FIG. 12) can be controlled to emit a red light signal at time t1. It should be noted that the present example is also applicable to a case of more than two light emitting arrays. That is, each light emitting array in a plurality of light emitting arrays can be controlled to emit light of different characteristics simultaneously, for example, three light emitting sub-pixels can be adjusted to emit light, so as to generate light signals of various characteristics.

At least an embodiment of the present disclosure provides a computer readable storage medium, which stores computer instructions thereon. Upon the computer instructions being executed by a processor, the following operations are performed: controlling at least one first light emitting unit in a first light emitting array to emit light; reading reflected signals caused by the light of the at least one first light emitting unit and respectively received at a plurality of first positions in the first light emitting array, and obtaining a plurality of first reflected light signals; performing a fingerprint identification based on distances between the plurality of first positions in the first light emitting array and the at least one first light emitting unit and the plurality of first reflected light signals. The computer readable storage medium is, for example, a magnetic storage medium, an optical storage medium or a semiconductor storage medium; the storage medium can be a non-volatile storage medium; the storage medium can be used not only to store computer executable instructions, but also to store data required for running the computer executable instructions or data generated by running the computer executable instructions.

The accompanying drawings involve only the structure(s) in connection with the embodiment(s) of the present disclosure, and other structure(s) can be referred to common design(s). In case of no conflict, the embodiments of the present disclosure and features in the embodiments can be combined.

## Claims

1. A fingerprint identification method performed by a fingerprint identification device, comprising:
controlling at least one first light emitting unit (1131a, 1131b) in a first light emitting array (113x) to emit light;
receiving, by a plurality of photosensitive elements at a plurality of first positions in the first light emitting array (113; 113x), reflected signals caused by the light of the at least one first light emitting unit (1131a, 1131b), respectively, as a plurality of first reflected light signals; and
performing a fingerprint identification based on the plurality of first reflected light signals and distances between the plurality of first positions in the first light emitting array and the at least one first light emitting unit (1131a, 1131b).

2. The fingerprint identification method according to claim 1, wherein
a plurality of first light emitting units (1131a, 1131b) in the first light emitting array (113x) are controlled to emit light sequentially;
reflected signals caused by the light of the plurality of first light emitting units (1131a. 1131b) are respectively received at the plurality of first positions in the first light emitting array (113x), and a set of first reflected light signals corresponding to the plurality of first light emitting units are obtained; and
the fingerprint identification is performed based on the set of first reflected light signals and distances between the plurality of first positions and the plurality of first light emitting units (1131a, 1131b).

3. The fingerprint identification method according to claim 2, wherein the plurality of first light emitting units (1131a, 1131b) emit light of a same characteristic,
optionally, the characteristic comprises at least one of wavelength and intensity.

4. The fingerprint identification method according to claim 3, wherein the plurality of first light emitting units (1131a, 1131b) are a plurality of sub-pixels having a same color; or, the plurality of first light emitting units (1131a, 1131b) are a plurality of pixels, and sub-pixels of a same color in the plurality of pixels are controlled to emit light.

5. The fingerprint identification method according to claim 3, wherein
light emitted from each of the plurality of first light emitting units (1131a, 1131b) comprises light of at least two different characteristics;
composite reflected signal caused by the light of the plurality of first light emitting units (1131a, 1131b) are simultaneously received at the plurality of first positions in the first light emitting array (113; 113x), and a plurality of composite reflected light signals corresponding to the plurality of first positions are obtained; and
the fingerprint identification is performed at least based on the plurality of composite reflected light signals and the distances between the plurality of first positions and the plurality of first light emitting units (1131a, 1131b),
optionally, the first light emitting unit (1131a, 1131b) is a pixel, at least two sub-pixels comprised in the pixel are controlled to emit light of different characteristics.

6. The fingerprint identification method according to claim 1, wherein
a plurality of first light emitting units (1131a, 1131b) in the first light emitting array are controlled to emit light of different characteristics, simultaneously;
composite reflected signals caused by the light of the plurality of first light emitting units (1131a, 1131b) are respectively received at the plurality of first positions in the first light emitting array (113; 113x), and a set of reflected light signals corresponding to the plurality of first light emitting units (1131a, 1131b) are obtained; and
the fingerprint identification is performed based on the set of reflected light signals and distances between the plurality of first positions and the plurality of first light emitting units (1131a, 1131b),
optionally, the plurality of first light emitting units (1131a, 1131b) are located at a plurality of positions in the first light emitting array, respectively.

7. The fingerprint identification method according to claim 6, wherein obtaining the set of reflected light signals corresponding to the plurality of first light emitting units (1131a, 1131b) comprises:
decomposing the composite reflected signals obtained at the plurality of first positions according to the different characteristics of the light emitted from the plurality of light emitting units (1131a, 1131b), to obtain the set of reflected light signals corresponding to the plurality of first light emitting units (1131a, 1131b),
optionally, the plurality of first light emitting units (1131a, 1131b) are pixels, N pixels in the first light emitting array (113; 113x) are controlled to emit N different characteristics of light, wherein N is an integer greater than 1.

8. The fingerprint identification method according to any one of claims 1 to 7, further comprising:
controlling at least one second light emitting unit (1131e, 1131f) in a second light emitting array (113; 113y) to emit light;
receiving, at a plurality of second positions in the second light emitting array (113; 113y), reflected signals caused by the light of the at least one second light emitting unit (1131e, 1131f), respectively, as a plurality of second reflected light signals; and
performing a fingerprint identification based on distances between the plurality of second reflected light signals and the plurality of second positions in the second light emitting array (113; 113y) and the at least one second light emitting unit (1131e, 1131f).

9. The fingerprint identification method according to claim 8, wherein the plurality of first reflected light signals are superimposed into one first signal, the plurality of second reflected light signals are superimposed into one second signal, the fingerprint identification is performed based on locations of the first light emitting array (113; 113x) and the second light emitting array (113; 113y), the first signal and the second signal,
optionally, the first light emitting units (1131a, 1131b) and the second light emitting units (1131e, 1131f) at same positions of the first light emitting array (113; 113x) and the second light emitting array (113; 113y) are controlled to emit light at a same time, a region of the first light emitting array (113; 113x) and a region of the second light emitting array partially (113; 113y) overlap each other such that the first light emitting array (113; 113x) and the second light emitting array (113; 113x) share one or more light emitting units and a part of the first positions overlaps with a part of the second positions.

10. The fingerprint identification method according to claim 9, wherein the plurality of first reflected light signals being superimposed into one first signal comprises superimposing first reflected light signals of photosensitive elements other than a photosensitive element having a maximum first reflected light signal in the first light emitting array (113; 113x) to the maximum first reflected light signal to obtain the first signal, and the plurality of second reflected light signals being superimposed into one second signal comprises superimposing second reflected light signals of photosensitive elements other than a photosensitive element having a maximum second reflected light signal in the second light emitting array (113; 113y) to the maximum second reflected light signal to obtain the second signal.

11. A fingerprint identification device, comprising:
a plurality of light emitting arrays (113; 113x; 113y), wherein each of the plurality of light emitting arrays (113; 113x; 113y) comprises a plurality of light emitting units (1131a, 1131b, 1131e, 1131f);
a plurality of photosensitive elements (1132a, 1132b, 1132e, 1132f), disposed at a plurality of positions in each of the plurality of light emitting arrays (113; 113x; 113y) and configured to receive light of the plurality of light emitting units (1131a, 1131b, 1131e, 1131f) to generate a plurality of reflected light signals; and
a processor, configured to:
read the plurality of reflected light signals from the plurality of photosensitive elements (1132a, 1132b, 1132e, 1132f); and
perform a fingerprint identification based on the plurality of reflected light signals and distances between the plurality of positions and the plurality of light emitting units (1131a, 1131b, 1131e, 1131f).

12. The fingerprint identification device according to claim 11, further comprising a light emitting control circuit (114), configured to control the plurality of light emitting units (1131a, 1131b, 1131e, 1131f) in the plurality of light emitting arrays (113; 113x; 113y) during a fingerprint identification phase.

13. The fingerprint identification device according to claim 12, wherein the light emitting control circuit (114) is further configured to drive different light emitting units (1131a, 1131b, 1131e, 1131f) to emit light at different times during the fingerprint identification phase; or configured to modulate characteristics of light emitting signals of the plurality of light emitting units (1131a, 1131b, 1131e, 1131f) during the fingerprint identification phase.

14. The fingerprint identification device according to any one of claims 11 to 13, wherein the plurality of light emitting arrays (113; 113x; 113y) comprises a first light emitting array (113; 113x) and a second light emitting array (113; 113y) adjacent to each other;
wherein the first light emitting array (113; 113x) and the second light emitting array (113; 113y) share a plurality of photosensitive elements (1132c, 1132d).

15. A display panel, comprising the fingerprint identification device according to any one of claims 11-14.

## Patentansprüche

1. Fingerabdruckidentifikationsverfahren, das mittels einer Fingerabdruckidentifikationsvorrichtung durchgeführt wird, umfassend:
Steuern mindestens einer ersten lichtemittierenden Einheit (1131a, 1131b) in einem ersten lichtemittierenden Array (113x), um Licht zu emittieren;
Empfangen, mittels einer Vielzahl von lichtempfindlichen Elementen an einer Vielzahl von ersten Positionen in dem ersten lichtemittierenden Array (113; 113x), von reflektierten Signalen, die mittels des Lichts der mindestens einen ersten lichtemittierenden Einheit (1131a, 1131b) verursacht werden, jeweils als eine Vielzahl von ersten reflektierten Lichtsignalen; und
Durchführen einer Fingerabdruckidentifikation basierend auf der Vielzahl der ersten reflektierten Lichtsignale und Abstände zwischen der Vielzahl von ersten Positionen in dem ersten lichtemittierenden Array und der mindestens einen ersten lichtemittierenden Einheit (1131a, 1131b).

2. Fingerabdruckidentifikationsverfahren gemäß Anspruch 1, wobei
eine Vielzahl von ersten lichtemittierenden Einheiten (1131a, 1131b) in dem ersten lichtemittierenden Array (113x) so gesteuert werden, dass sie nacheinander Licht emittieren;
wobei reflektierte Signale, mittels des Lichts der Vielzahl von ersten lichtemittierenden Einheiten (1131a, 1131b) verursacht werden, jeweils an der Vielzahl von ersten Positionen in dem ersten lichtemittierenden Array (113x) empfangen werden, und ein Satz von ersten reflektierten Lichtsignalen, die zu der Vielzahl von ersten lichtemittierenden Einheiten korrespondieren, erhalten wird; und
wobei die Fingerabdruckidentifizierung basierend auf dem Satz von ersten reflektierten Lichtsignalen und Abständen zwischen der Vielzahl von ersten Positionen und der Vielzahl von ersten lichtemittierenden Einheiten (1131a, 1131b) durchgeführt wird.

3. Fingerabdruckidentifikationsverfahren gemäß Anspruch 2, wobei die Vielzahl von ersten lichtemittierenden Einheiten (1131a, 1131b) Licht einer gleichen Charakteristik aussenden,
optional, wobei die Charakteristik mindestens eines von Wellenlänge und Intensität umfasst.

4. Fingerabdruckidentifikationsverfahren gemäß Anspruch 3, wobei die Vielzahl von ersten lichtemittierenden Einheiten (1131a, 1131b) eine Vielzahl von Sub-Pixeln welche dieselbe Farbe haben; oder wobei die Vielzahl von ersten lichtemittierenden Einheiten (1131a, 1131b) eine Vielzahl von Pixeln sind, und Sub-Pixel einer selben Farbe in der Vielzahl von Pixeln gesteuert werden, um Licht zu emittieren.

5. Fingerabdruckidentifikationsverfahren gemäß Anspruch 3, wobei
Licht, das von jeder der von der Vielzahl von ersten lichtemittierenden Einheiten (1131a, 1131b) emittiert wird, Licht mit mindestens zwei verschiedenen Charakteristiken umfasst;
wobei zusammengesetzte reflektierte Signale, die mittels des Lichts der Vielzahl von ersten lichtemittierenden Einheiten (1131a, 1131b) verursacht werden, gleichzeitig an der Vielzahl von ersten Positionen in dem ersten lichtemittierenden Array (113; 113x) empfangen werden, und eine Vielzahl von zusammengesetzten reflektierten Lichtsignalen, die zu der Vielzahl von ersten Positionen korrespondiert, erhalten werden; und
wobei die Fingerabdruckidentifizierung zumindest basierend auf der Vielzahl von zusammengesetzten reflektierten Lichtsignalen und der Abstände zwischen der Vielzahl von ersten Positionen und der Vielzahl von ersten lichtemittierenden Einheiten (1131a, 1131b) durchgeführt wird,
optional wobei die erste lichtemittierende Einheit (1131a, 1131b) ein Pixel ist, und mindestens zwei in dem Pixel enthaltene Sub-Pixel gesteuert werden, um Licht unterschiedlicher Charakteristiken zu emittieren.

6. Fingerabdruckidentifikationsverfahren gemäß Anspruch 1,
wobei eine Vielzahl von ersten lichtemittierenden Einheiten (1131a, 1131b) in dem ersten lichtemittierenden Array gesteuert werden, um gleichzeitig Licht unterschiedliche Charakteristiken zu emittieren;
wobei zusammengesetzte reflektierte Signale, die mittels des Lichts der Vielzahl von ersten lichtemittierenden Einheiten (1131a, 1131b) verursacht werden, jeweils an der Vielzahl von ersten Positionen in dem ersten lichtemittierenden Array (113; 113x) empfangen werden, und ein Satz von reflektierten Lichtsignalen korrespondierend zu der Vielzahl von ersten lichtemittierenden Einheiten (1131a, 1131b) erhalten wird; und
wobei die Fingerabdruckidentifikation basierend auf dem Satz von reflektierten Lichtsignalen und den Abständen zwischen der Vielzahl von ersten Positionen und der Vielzahl von ersten lichtemittierenden Einheiten (1131a, 1131b) durchgeführt wird,
optional wobei die mehreren ersten lichtemittierenden Einheiten (1131a, 1131b) jeweils an einer Vielzahl von Positionen in dem ersten lichtemittierenden Array angeordnet sind.

7. Fingerabdruckidentifikationsverfahren gemäß Anspruch 6, wobei das Erhalten des Satzes von reflektierten Lichtsignalen, die zu der Vielzahl von ersten lichtemittierenden Einheiten (1131a, 1131b) korrespondieren, umfasst:
Zerlegen der zusammengesetzten reflektierten Signale, die an der Vielzahl von ersten Positionen erhalten wurden, gemäß den unterschiedlichen Charakteristiken des von der Vielzahl von lichtemittierenden Einheiten (1131a, 1131b) emittierten Lichts, um den Satz von reflektierten Lichtsignalen korrespondierend zu den mehreren ersten lichtemittierenden Einheiten (1131a, 1131b) zu erhalten,
optional wobei die mehreren ersten lichtemittierenden Einheiten (1131a, 1131b) Pixel sind, wobei N Pixel in dem ersten lichtemittierenden Array (113; 113x) gesteuert werden, um N verschiedene Lichtcharakteristiken zu emittieren, wobei N eine ganze Zahl größer als 1 ist.

8. Fingerabdruckidentifikationsverfahren gemäß einem der Ansprüche 1 bis 7, das ferner umfasst:
Steuern mindestens einer zweiten lichtemittierenden Einheit (1131e, 1131f) in einem zweiten lichtemittierenden Array (113; 113y), um Licht zu emittieren;
Empfangen von reflektierten Signalen, die jeweils mittels des Lichts der mindestens einer zweiten lichtemittierenden Einheit (1131e, 1131f) verursacht werden, an einer Vielzahl von zweiten Positionen in dem zweiten lichtemittierenden Array (113; 113y) als eine Vielzahl von zweiten reflektierten Lichtsignalen; und
Durchführen einer Fingerabdruckidentifikation basierend auf Abständen zwischen der Vielzahl von zweiten reflektierten Lichtsignalen und der Vielzahl von zweiten Positionen in dem zweiten lichtemittierenden Array (113; 113y) und der mindestens einen zweiten lichtemittierenden Einheit (1131e, 1131f).

9. Fingerabdruckidentifikationsverfahren gemäß Anspruch 8, wobei die Vielzahl von ersten reflektierten Lichtsignalen in ein erstes Signal überlagert werden, die Vielzahl von zweiten reflektierten Lichtsignalen in ein zweites Signal überlagert werden, die Fingerabdruckidentifikation basierend auf Positionen von dem ersten lichtemittierenden Array (113; 113x) und dem zweiten lichtemittierenden Array (113; 113y), dem ersten Signal und dem zweiten Signal durchgeführt wird,
optional wobei die ersten lichtemittierenden Einheiten (1131a, 1131b) und die zweiten lichtemittierenden Einheiten (1131e, 1131f) an gleichen Positionen des ersten lichtemittierenden Arrays (113; 113x) und des zweiten lichtemittierenden Arrays (113; 113y) gesteuert werden, um gleichzeitig Licht zu emittieren, ein Bereich des ersten lichtemittierenden Arrays (113; 113x) und ein Bereich des zweiten lichtemittierenden Arrays (113; 113y) einander teilweise überlappen, so dass das erste lichtemittierende Array (113; 113x) und das zweite lichtemittierende Array (113; 113x) sich eine oder mehrere lichtemittierende Einheiten teilen und ein Teil der ersten Positionen sich mit einem Teil der zweiten Positionen überlappt.

10. Fingerabdruckidentifikationsverfahren gemäß Anspruch 9, wobei das Überlagern der Vielzahl von ersten reflektierten Lichtsignalen in ein erstes Signal überlagert werden, das Überlagern von ersten reflektierten Lichtsignalen von anderen lichtempfindlichen Elementen als einem lichtempfindlichen Element, das ein maximales erstes reflektiertes Lichtsignal in dem ersten lichtemittierenden Array (113; 113x) aufweist, mit dem maximalen ersten reflektierten Lichtsignal umfasst, um das erste Signal zu erhalten, und das Überlagern der Vielzahl von zweiten reflektierten Lichtsignalen zu einem zweiten Signal, das Überlagern von zweiten reflektierten Lichtsignalen von anderen lichtempfindlichen Elementen als einem lichtempfindlichen Element, das ein maximales zweites reflektiertes Lichtsignal in der zweiten lichtemittierenden Anordnung (113; 113y) aufweist, mit dem maximalen zweiten reflektierten Lichtsignal umfasst, um das zweite Signal zu erhalten.

11. Fingerabdruckidentifikationsvorrichtung, umfassend:
eine Vielzahl von lichtemittierenden Arrays (113; 113x; 113y), wobei jedes von der Vielzahl von lichtemittierenden Arrays (113; 113x; 113y) eine Vielzahl von lichtemittierenden Einheiten (1131a, 1131b, 1131e, 1131f) umfasst;
eine Vielzahl von lichtempfindlichen Elementen (1132a, 1132b, 1132e, 1132f), die an einer Vielzahl von Positionen in jeder der Vielzahl von lichtemittierenden Arrays (113; 113x; 113y) angeordnet und konfiguriert sind, um Licht der Vielzahl von lichtemittierenden Einheiten (1131a, 1131b, 1131e, 1131f) zu empfangen, um eine Vielzahl von reflektierten Lichtsignalen zu erzeugen; und
einen Prozessor, der konfiguriert ist, zum:
Lesen der Vielzahl von reflektierten Lichtsignalen von der Vielzahl von lichtempfindlichen Elementen (1132a, 1132b, 1132e, 1132f); und
Durchführen einer Fingerabdruckidentifizierung basieren auf der Vielzahl von reflektierten Lichtsignale und den Abständen zwischen der Vielzahl von Positionen und der Vielzahl von lichtemittierenden Einheiten (1131a, 1131b, 1131e, 1131f).

12. Fingerabdruckidentifikationsvorrichtung gemäß Anspruch 11, ferner umfassend eine Lichtemissions-Steuerschaltung (114), die konfiguriert ist, um die Vielzahl von lichtemittierenden Einheiten (1131a, 1131b, 1131e, 1131f) in den mehreren lichtemittierenden Arrays (113; 113x; 113y) während einer Fingerabdruck-Identifizierungsphase zu steuern.

13. Fingerabdruckidentifikationsvorrichtung gemäß Anspruch 12, wobei die Lichtemissions-Steuerschaltung (114) ferner konfiguriert ist, um verschiedene lichtemittierende Einheiten (1131a, 1131b, 1131e, 1131f) anzusteuern, um während der Fingerabdruckidentifizierungsphase zu unterschiedlichen Zeiten Licht zu emittieren; oder konfiguriert ist, um während der Fingerabdruckidentifizierungsphase Charakteristiken von Lichtemissionssignalen der Vielzahl von lichtemittierenden Einheiten (1131a, 1131b, 1131e, 1131f) zu modulieren.

14. Fingerabdruckidentifikationsvorrichtung gemäß einem der Ansprüche 11 bis 13, wobei die Vielzahl von lichtemittierenden Arrays (113; 113x; 113y) ein erstes lichtemittierendes Array (113; 113x) und ein zweites lichtemittierendes Array (113; 113y) umfasst, die einander benachbart sind;
wobei die erste lichtemittierende Anordnung (113; 113x) und die zweite lichtemittierende Anordnung (113; 113y) eine Vielzahl von lichtempfindlichen Elementen (1132c, 1132d) gemeinsam nutzen.

15. Anzeigetafel, umfassend die Fingerabdruckidentifikationsvorrichtung gemäß einem der Ansprüche 11 bis 14.

## Revendications

1. Procédé d'identification d'empreinte digitale exécuté par un dispositif d'identification d'empreinte digitale, comprenant :
de commander au moins une première unité photo-émettrice (1131a, 1131b) dans une première rangée photo-émettrice (113x) à émettre de la lumière ;
de recevoir, par une pluralité d'éléments photosensibles à une pluralité de premières positions dans la première rangée photo-émettrice (113 ; 113x), des signaux réfléchis provoqués par la lumière de l'au moins une première unité photo-émettrice (1131a, 1131b), respectivement, en tant qu'une pluralité de premiers signaux lumineux réfléchis ; et
d'exécuter une identification d'empreinte digitale en se basant sur la pluralité de premiers signaux lumineux réfléchis et des distances entre la pluralité de premières positions dans la première rangée photo-émettrice et l'au moins une première unité photo-émettrice (1131a, 1131b).

2. Procédé d'identification d'empreinte digitale selon la revendication 1, dans lequel
une pluralité de premières unités photo-émettrices (1131a, 1131b) dans la première rangée photo-émettrice (113x) sont commandées à émettre de la lumière de manière séquentielle ;
des signaux réfléchis provoqués par la lumière de la pluralité de premières unités photo-émettrices (1131a, 1131b) sont respectivement reçus sur la pluralité de premières positions dans la première rangée photo-émettrice (113x), et un jeu de premiers signaux lumineux réfléchis correspondant à la pluralité de premières unités photo-émettrices sont obtenus ; et
l'identification d'empreinte digitale est exécutée en se basant sur le jeu de premiers signaux lumineux réfléchis et de distances entre la pluralité de premières positions et la pluralité de premières unités photo-émettrices (1131a, 1131b).

3. Procédé d'identification d'empreinte digitale selon la revendication 2, dans lequel
la pluralité de premières unités photo-émettrices (1131a, 1131b) émet de la lumière d'une même caractéristique,
en option, la caractéristique comprend au moins un de la longueur d'onde et de l'intensité.

4. Procédé d'identification d'empreinte digitale selon la revendication 3, dans lequel
la pluralité de premières unités photo-émettrices (1131a, 1131b) sont une pluralité de sous-pixels ayant une même couleur, ou bien, la pluralité de premières unités photo-émettrices (1131a, 1131b) sont une pluralité de pixels, et des sous-pixels d'une même couleur dans la pluralité de pixels sont commandés à émettre de la lumière.

5. Procédé d'identification d'empreinte digitale selon la revendication 3, dans lequel
la lumière émise par chacune de la pluralité de premières unités photo-émettrices (1131a, 1131b) comprend de la lumière d'au moins deux caractéristiques différentes ;
des signaux réfléchis composites provoqués par la lumière de la pluralité de premières unités photo-émettrices (1131a, 1131b) sont reçus simultanément à la pluralité de premières positions dans la première rangée photo-émettrice (113 ; 113x), et une pluralité de signaux lumineux réfléchis composites correspondant à la pluralité de premières positions sont obtenus ; et
l'identification d'empreinte digitale est exécutée au moins en se basant sur la pluralité de signaux lumineux réfléchis composites et les distances entre la pluralité de premières positions et la pluralité de premières unités photo-émettrices (1131a, 1131b),
en option, la première unité photo-émettrice (1131a, 1131b) est un pixel, au moins deux sous-pixels compris dans le pixel sont commandés à émettre de la lumière de différentes caractéristiques.

6. Procédé d'identification d'empreinte digitale selon la revendication 1, dans lequel
une pluralité de premières unités photo-émettrices (1131a, 1131b) dans la première rangée photo-émettrice sont commandées à émettre de la lumière de différentes caractéristiques, simultanément ;
des signaux réfléchis composites provoqués par la lumière de la pluralité de premières unités photo-émettrices (1131a, 1131b) sont reçus respectivement à la pluralité de premières positions dans la première rangée photo-émettrice (113 ; 113x), et un jeu de signaux lumineux réfléchis correspondant à la pluralité de premières unités photo-émettrices (1131a, 1131b) sont obtenus ; et
l'identification d'empreinte digitale est exécutée en se basant sur le jeu de signaux lumineux réfléchis et les distances entre la pluralité de premières positions et la pluralité de premières unités photo-émettrices (1131a, 1131b),
en option, la pluralité de premières unités photo-émettrices (1131a, 1131b) sont situées à une pluralité de positions dans la première rangée photo-émettrice, respectivement.

7. Procédé d'identification d'empreinte digitale selon la revendication 6, dans lequel l'obtention du jeu de signaux lumineux réfléchis correspondant à la pluralité de premières unités photo-émettrices (1131a, 1131b) comprend :
de décomposer les signaux réfléchis composites obtenus à la pluralité de premières positions selon les différentes caractéristiques de la lumière émise par la pluralité de premières unités photo-émettrices (1131a, 1131b), pour obtenir le jeu de signaux lumineux réfléchis correspondant à la pluralité de premières unités photo-émettrices (1131a, 1131b),
en option, la pluralité de premières unités photo-émettrices (1131a, 1131b) sont des pixels, des N pixels dans la première rangée photo-émettrice (113 ; 113x) sont commandés pour émettre N différentes caractéristiques de lumière, dans lequel N est un nombre entier supérieur à 1.

8. Procédé d'identification d'empreinte digitale selon l'une quelconque des revendications 1 à 7, comprenant en outre :
de commander au moins une seconde unité photo-émettrice (1131e, 1131f) dans une seconde rangée photo-émettrice (113 ; 113y) à émettre de la lumière ;
de recevoir, à une pluralité de secondes positions dans la seconde rangée photo-émettrice (113 ; 113y), des signaux réfléchis provoqués par la lumière de l'au moins une seconde unité photo-émettrice (1131e, 1131f), respectivement, en tant qu'une pluralité de seconds signaux lumineux réfléchis ; et
d'exécuter une identification d'empreinte digitale en se basant sur des distances entre la pluralité de seconds signaux lumineux réfléchis et la pluralité de secondes positions dans la seconde rangée photo-émettrice (113 ; 113y), et l'au moins une seconde unité photo-émettrice (1131e, 1131f).

9. Procédé d'identification d'empreinte digitale selon la revendication 8, dans lequel la pluralité de premiers signaux lumineux réfléchis sont superposés en un premier signal, la pluralité de seconds signaux lumineux réfléchis sont superposés en un second signal, l'identification d'empreinte digitale est exécutée en se basant sur des emplacements de la première rangée photo-émettrice (113 ; 113x) et de la seconde rangée photo-émettrice (113 ; 113y), le premier signal et le second signal ;
en option, les premières unités photo-émettrices (1131a, 1131b) et les secondes unités photo-émettrices (1131e, 1131f) aux mêmes positions que la première rangée photo-émettrice (113 ; 113x) et la seconde rangée photo-émettrice (113 ; 113y) sont commandées à émettre de la lumière au même moment, une région de la première rangée photo-émettrice (113 ; 113x) et une région de la seconde rangée photo-émettrice (113 ; 113y) se chevauchent partiellement l'une l'autre de telle façon que la première rangée photo-émettrice (113 ; 113x) et la seconde rangée photo-émettrice (113 ; 113y) partagent une ou plusieurs unités photo-émettrices et une partie des premières positions se chevauche avec une partie des secondes positions.

10. Procédé d'identification d'empreinte digitale selon la revendication 9, dans lequel la pluralité de premiers signaux lumineux réfléchis étant superposés en un premier signal comprend de superposer des premiers signaux lumineux réfléchis d'éléments photosensibles autres qu'un élément photosensible ayant un premier signal lumineux réfléchi maximal dans la première rangée photo-émettrice (113 ; 113x) au premier signal lumineux réfléchi maximal pour obtenir le premier signal, et la pluralité de seconds signaux lumineux réfléchis étant superposés en un second signal comprend de superposer lesdits seconds signaux lumineux réfléchis d'éléments photosensibles autres qu'un élément photosensible ayant un second signal lumineux réfléchi maximal dans la seconde rangée photo-émettrice (113 ; 113y) au second signal lumineux réfléchi maximal pour obtenir le second signal.

11. Dispositif d'identification d'empreinte, comprenant :
une pluralité de rangées photo-émettrices (113 ; 113x ; 113y), dans lequel chacun de la pluralité de rangées photo-émettrices (113 ; 113x ; 113y) comprend une pluralité d'unités photo-émettrices (1131a, 1131b, 1131e, 1131f) ;
une pluralité d'éléments photosensibles (1132a, 1132b, 1132e, 1132f), disposés à une pluralité de positions dans chacune de la pluralité de rangées photo-émettrices (113 ; 113x ; 113y) et configurés pour recevoir de la lumière de la pluralité d'unités photo-émettrices (1131a, 1131b, 1131e, 1131f) pour générer une pluralité de signaux lumineux réfléchis ; et
un processeur, configuré pour :
lire la pluralité de signaux lumineux réfléchis venant de la pluralité d'éléments photosensibles (1132a, 1132b, 1132e, 1132f) ; et
exécuter une identification d'empreinte digitale en se basant sur la pluralité de signaux lumineux réfléchis et de distances entre la pluralité de positions et la pluralité d'unités photo-émettrices (1131a, 1131b, 1131e, 1131f).

12. Dispositif d'identification d'empreinte selon la revendication 11, comprenant en outre un circuit de commande d'émission de lumière (114), configuré pour commander la pluralité d'unités photo-émettrices (1131a, 1131b, 1131e, 1131f) dans la pluralité de rangées photo-émettrices (113 ; 113x ; 113y) pendant une phase d'identification d'empreinte.

13. Dispositif d'identification d'empreinte selon la revendication 12, dans lequel le circuit de commande d'émission de lumière (114) est en outre configuré pour entraîner différentes unités photo-émettrices (1131a, 1131b, 1131e, 1131f) à émettre de la lumière à différents moments pendant la phase d'identification d'empreinte digitale ; ou configuré pour moduler des caractéristiques de signaux photo-émetteurs de la pluralité d'unités photo-émettrices (1131a, 1131b, 1131e, 1131f) pendant la phase d'identification d'empreinte.

14. Dispositif d'identification d'empreinte selon l'une quelconque des revendications 11 à 13, dans lequel la pluralité de rangées photo-émettrices (113 ; 113x ; 113y) comprend une première rangée photo-émettrice (113 ; 113x) et une seconde rangée photo-émettrice (113 ; 113y) adjacentes l'une à l'autre ;
dans lequel la première rangée photo-émettrice (113 ; 113x) et la seconde rangée photo-émettrice (113 ; 113y) partagent une pluralité d'éléments photosensibles (1132c, 1132d).

15. Panneau d'affichage comprenant le dispositif d'identification d'empreinte digitale selon l'une quelconque des revendications 11 - 14.
